# EUROPEAN PATENT APPLICATION

(11) **EP 4 794 236 A1**
(43) Date of publication of application: **19.08.2026**
(21) Application number: 23955127.8
(22) Date of filing: 11.10.2023
(51) Int. Cl.: H04L 5/00

(54) **SIGNAL PROCESSING METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN); LIU, Wendong, Dongguan, Guangdong 523860 (CN)
(74) Representative: Penza, Giancarlo
(86) International application number: PCT/CN2023/124107
(87) International publication number: WO 2025/076745

(57) **Abstract**

Embodiments of the present application provide a signal processing method and apparatus, a terminal device, and a network device. The method comprises: on the basis of configuration information related to a first signal, a terminal device determines whether to use an AI model to process or measure the first signal, and/or a first AI model used for processing or measuring the first signal. The configuration information comprises any one of the following: reference signal configuration information used for configuring the first signal, CSI reporting configuration information associated with the first signal, a TCI state associated with the first signal, CORESET group index information associated with the first signal, and PCI information associated with the first signal.

## Description

### TECHNICAL FIELD

Embodiments of the present disclosure relates to the technical field of mobile communications, and more particularly to, methods for signal processing, devices for signal processing, a terminal device and a network device.

### BACKGROUND

The current 5th Generation (5G) communication system may use an Artificial Intelligence (AI) model to assist the terminal device in uplink and downlink communication. Herein, the AI model used for the uplink and downlink communication procedure is usually trained based on a cell/Transmission Reception Point (TRP). When the cell/TRP changes, the terminal device needs to switch into the AI model corresponding to the cell/TRP for communication to ensure communication performance. However, the cell/TRP for the transmission of the signal is usually invisible to the terminal device, and the terminal device is unable to know the cell/TRP for the transmission of the signal.

In addition, in the communication system, in order to implement different communication functions (such as beam management, Channel State Information (CSI) measurement, positioning), the network device may configure different types of reference signals for related measurement and reporting of different communication functions. If the measurement and reporting are based on an AI model, it is necessary to use different AI models for the measurement and reporting in order to implement different communication functions. However, the communication function of the reference signal configured by the network device is also usually invisible to the terminal device, and the terminal device is unable to know the function of the reference signal.

Based on this, in the case where the cell/TRP for the signal transmission and the function of the reference signal is invisible to the terminal device, how to enable the terminal device to know the cell/TRP for the transmission of the current signal and the AI model corresponding to the function supported by the current signal is a problem to be solved.

### SUMMARY

Embodiments of the present disclosure provide methods for signal processing, devices for signal processing, a terminal device and a network device.

In a first aspect, the method for signal processing provided by the embodiments of the present disclosure includes a following operation.

A terminal device determines, based on configuration information related to a first signal, whether to perform processing or measurement on the first signal by using an AI model, and/or a first AI model used for performing the processing or measurement on the first signal, where the configuration information includes any one of the following.

Reference signal configuration information for configuring the first signal.

CSI reporting configuration information associated with the first signal.

A Transmission Configuration Indication (TCI) state associated with the first signal.

Control Resource Set (CORESET) group index information associated with the first signal.

Physical Cell Identifier (PCI) information associated with the first signal.

In a second aspect, the method for signal processing provided by the embodiments of the present disclosure includes a following operation.

A network device indicates, through configuration information related to a first signal, whether to perform processing or measurement on the first signal by using an AI model, and/or a first AI model used for performing the processing or measurement on the first signal, where the configuration information includes any one of the following.

Reference signal configuration information for configuring the first signal.

CSI reporting configuration information associated with the first signal.

A TCI state associated with the first signal.

CORESET group index information associated with the first signal.

PCI information associated with the first signal.

In a third aspect, the device for signal processing provided by the embodiments of the present disclosure is applied to a terminal device, and includes a first determining unit.

The first determining unit is configured to determine, based on configuration information related to a first signal, whether to perform processing or measurement on the first signal by using an AI model, and/or a first AI model used for performing the processing or measurement on the first signal, where the configuration information includes any one of the following.

Reference signal configuration information for configuring the first signal.

CSI reporting configuration information associated with the first signal.

A TCI state associated with the first signal.

CORESET group index information associated with the first signal.

PCI information associated with the first signal.

In a fourth aspect, the communication device provided by the embodiments of the present disclosure is applied to a network device, and includes an indicating unit.

The indicating unit is configured to indicate, through configuration information related to a first signal, whether to perform processing or measurement on the first signal by using an AI model, and/or a first AI model used for performing the processing or measurement on the first signal, where the configuration information includes any one of the following.

Reference signal configuration information for configuring the first signal.

CSI reporting configuration information associated with the first signal.

A TCI state associated with the first signal.

CORESET group index information associated with the first signal.

PCI information associated with the first signal.

In a fifth aspect, the terminal device provided by the embodiments of the present disclosure includes a processor and a memory. The memory is configured to store computer-executable instructions, and the processor is connected to the memory and is configured to implement the method for signal processing in the first aspect through executing the computer-executable instructions.

In a sixth aspect, the network device provided by the embodiments of the present disclosure includes a processor and a memory. The memory is configured to store computer-executable instructions, and the processor is connected to the memory and is configured to implement the method for signal processing in the second aspect through executing the computer-executable instructions.

In a seventh aspect, a chip provided by the embodiments of the present disclosure is configured to implement the method for signal processing in the first aspect or the second aspect.

Specifically, the chip includes a processor configured to invoke and execute a computer program from a memory, to enable a device on which the chip is mounted to perform the method for signal processing in the first aspect or the second aspect.

In an eighth aspect, the embodiments of the present disclosure provide a computer-readable storage medium. The computer-readable storage medium has stored a computer program that, when executed by at least one processor, implements the method for signal processing in the first aspect or the second aspect.

In a ninth aspect, the embodiments of the present disclosure provide a computer program product. The computer program product includes a computer storage medium storing a computer program including instructions executable by at least one processor that, when executed by at least one processor, implements the method for signal processing in the first aspect or second aspect.

In a tenth aspect, the embodiments of the present disclosure provide a computer program that, when executed on a computer, causes the computer to perform the method for signal processing in the first aspect or the second aspect.

The embodiments of the present disclosure provide a method for signal processing. The terminal device determines, according to the configuration information related to the first signal, whether to perform the processing or measurement on the first signal by using the AI model, and/or the first AI model used for performing the processing or measurement on the first signal. Herein, the configuration information related to the first signal may be configuration information associated with functions of the TRP/cell/signal, such as, the reference signal configuration information, the CSI reporting configuration information, the TCI state, the CORESET group index information, or the PCI information. In this way, the network device may indicate, to the terminal device through the configuration information related to the first signal, whether to perform the processing or measurement on the first signal by using the AI model, based on whether the function of the TRP/cell/signal support the AI model-based transmission, so as to enable the terminal device to select an optimal method to perform the processing or measurement on the first signal. In addition, since the configuration information related to the first signal is associated with the function of the TRP/cell/signal, the network device is able to configure different AI models for different TRP/cell/signal functions through the configuration information related to the first signal. In this way, the AI model specific to the function of the TRP/cell/signal can be implemented, thereby improving the performance of the AI model-based transmission.

### BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:
FIG. 1 is a schematic diagram of a communication architecture;
FIG. 2 is a schematic diagram of a scenario of a multi-TRP downlink coherent transmission;
FIG. 3A is a first schematic diagram of a scenario of multi-Physical Downlink Control Channel (PDCCH) downlink non-coherent transmission;
FIG. 3B is a second schematic diagram of a scenario of multi-PDCCH downlink non-coherent transmission;
FIG. 4 is a schematic diagram of a scenario of a single-PDCCH downlink non-coherent transmission;
FIG. 5 is a schematic structural diagram of a neuron;
FIG. 6 is a schematic structural diagram of a neural network;
FIG. 7 is a schematic flowchart of a method for signal processing according to an embodiment of the present disclosure;
FIG. 8 is a schematic diagram of a structural composition of a communication device 800 according to an embodiment of the present disclosure;
FIG. 9 is a schematic diagram of a structural composition of a communication device 900 according to an embodiment of the present disclosure;
FIG. 10 is a schematic structural diagram of a communication device according to an embodiment of the present disclosure;
FIG. 11 is a schematic structural diagram of a chip according to an embodiment of the present disclosure; and
FIG. 12 is a schematic structural diagram of a communication system according to an embodiment of the present disclosure.

### DETAILED DESCRIPTION

The technical solutions of the embodiments of the present disclosure would be described in conjunction with the accompanying drawings in the embodiments of the present disclosure. It is apparent that the described embodiments are only part of the embodiments of the present disclosure, not all the embodiments. Based on the embodiments in the present disclosure, all other embodiments obtained by those of ordinary skill in the art without creative work shall fall within the scope of protection of the present disclosure.

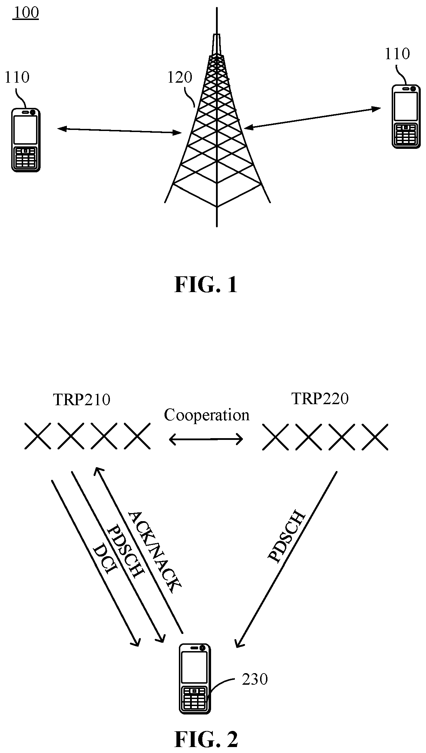

FIG. 1 is a schematic diagram of an application scenario of the embodiments of the present disclosure.

As illustrated in FIG. 1, the communication system 100 may include a terminal device 110 and a network device 120. The network device 120 may communicate with the terminal device 110 through an air interface. Multi-service transmission between the terminal device 110 and the network device 120 is supported.

It is to be understood that the embodiments of the present disclosure are illustrated with reference to the communication system 100 only, but are not limited thereto. That is to say, the technical solutions of the embodiments of the present disclosure may be applied to various communication systems, such as a Long Term Evolution (LTE) system, an LTE Time Division Duplex (TDD), a Universal Mobile Telecommunication System (UMTS), an Internet of Things (IoT) system, a Narrow Band Internet of Things (NB-IoT) system, an Enhanced Machine-Type Communications (eMTC) system, a 5G communication system (also referred to as a New Radio (NR) communication system), or a future communication system, etc.

In the communication system 100 illustrated in FIG. 1, the network device 120 may be an access network device that communicates with the terminal device 110. The access network device may provide communication coverage for a specific geographic region and may communicate with a terminal device 110 in the coverage.

The network device 120 may be an Evolutional Node B (eNB or eNodeB) in an LTE system, a Next Generation Radio Access Network (NG RAN) device, a base station (gNB) in an NR system, or a wireless controller in a Cloud Radio Access Network (CRAN). The network device may further be a relay station, an access point, a vehicle-mounted device, a wearable device, a hub, a switch, a network bridge, a router, a network device in a future evolved Public Land Mobile Network (PLMN) or the like.

The terminal device 110 may be any terminal device, which includes, but not limited to, a terminal device that has a wired or wireless connection to the network device 120 or other terminal devices.

For example, the terminal device 110 may be an access terminal, a UE, a user unit, a user station, a mobile station, a mobile platform, a remote station, a remote terminal, a mobile device, a user terminal, a terminal, a wireless communications device, a user agent, or user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a 5G network, a terminal device in a future evolved network or the like.

The terminal device 110 may be applied to Device to Device (D2D) communication.

FIG. 1 exemplarily illustrates one network device and two terminal devices. Optionally, the communication system 100 may include multiple network devices, and another number of terminal devices may be included in the coverage of each network device, which is not limited in the embodiments of the present disclosure.

It is to be noted that FIG. 1 only illustrates systems to which the present disclosure is applied by way of examples, and the methods in the embodiments of the present disclosure may also be applied to other systems. In addition, the terms "system" and "network" are often used interchangeably herein.

It is to be understood that the term "and/or" in the present disclosure is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

It is further to be understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association relationship between A and B.

It is further to be understood that the term "correspond" mentioned in the description of the embodiments of the present disclosure may mean that there is a direct correspondence or an indirect correspondence between the two, may also mean that there is an association relationship between the two, and may also be a relationship between indication and being indicated, configuration and being configured, etc.

It is further to be understood that the term "predefined" or "predefined rule" mentioned in the embodiments of the present disclosure may be achieved by pre-storing corresponding codes, tables or other means used for indicating relevant information in devices (e.g., including the terminal devices and the network devices), and the specific implementation thereof is not limited in the present disclosure. For example, predefined may refer to what is defined in the protocol. It is further to be understood that in the embodiments of the present disclosure, the "protocol" may be a standard protocol in the communication field. For example, the protocol may include an LTE protocol, a NR protocol, and related protocols applied in future communication systems, which are not limited in the present disclosure.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

The multi-TRP-based downlink Coherent Joint Transmission (CJT) is introduced in the NR communication system. The downlink CJT is generally based on an ideal backhaul link. Multiple TRPs use different beams and/or precoding matrices to send the same data on the same physical resource. By adjusting the precoding matrix, coherent superposition of the data sent by different TRPs is implemented at the terminal device side, thereby improving performance of the data transmission.

In order to enable the coherent superposition of the data sent by different TRPs is implemented at the terminal device side, the terminal device needs to feed back CSI of different TRPs based on the assumption of the CJT.

It is to be noted that the terminal device may feed back a Rank Indicator (RI), one or more Precoding Matrix Indicators (PMI), and a Channel Quality Indicator (CQI) in the CSI. The PMI may include precoding information of multiple TRPs, and the terminal device may feed back the precoding information of the multiple TRPs in one PMI, or may feed back the precoding information of the multiple TRPs respectively in multiple PMIs, thereby achieving the effect of coherent transmission when the network device performs precoding by using the precoding information.

It is to be noted that the CSI may be measured based on a Channel State Information-Reference Signal (CSI-RS) resource configured by the network device. The network device may configure multiple CSI-RS resources, and each resource corresponds to one TRP. The terminal device performs CSI measurement based on the channel information obtained from the multiple CSI-RS resources and the assumption of the coherent transmission.

Furthermore, the terminal device may select one or more CSI-RS resources from multiple CSI-RS resources configured by the network device, and feed back the CSI corresponding to the one or more CSI-RS resources, thereby implementing the function of TRP selection at the terminal device side and reducing the feedback overhead.

FIG. 2 is a schematic diagram of a scenario of a multi-TRP downlink coherent transmission. As illustrated in FIG. 2, it is assumed that there are two TRPs, denoted as TRP 210 and TRP 220, respectively. The TRP 210 and TRP 220 may cooperate with each other. The TRP 210 and the TRP 220 may respectively send, by using different beams and/or precoding matrices, Physical Downlink Shared Channels (PDSCH) to the terminal device 230 on the same physical resource. The coherent superposition of the PDSCHs sent by the TRP 210 and the TRP 220 may be implemented at the terminal device 230 side by adjusting the precoding matrices. The terminal device 230 may feed back Acknowledgement (ACK)/Negative Acknowledgement (NACK) and CSI to the TRP 210. The Downlink Control Information (DCI) used for scheduling the PDSCH transmitted by the TRP 210 may be carried by a CORESET.

A multi-TRP-based downlink Non-Coherent Joint Transmission (NC-JT) is also introduced in the NR communication system. The backhaul connection between the TRPs may be ideal or non-ideal. In the ideal backhaul, the TRPs are able to quickly and dynamically perform information interaction, and in the non-ideal backhaul, the TRPs are able to quasi-statically perform the information interaction due to a large delay. The multiple TRPs may adopt different control channels to independently schedule multiple PDSCH transmissions of one terminal device. The multiple TRPs may also adopt the same control channel to schedule transmissions of different TRPs, and different transport layers are adopted for data of different TRPs. Two implementations where the multiple TRPs perform the scheduling by adopting the control channel(s) will be described below.

In a possible implementation, for downlink transmissions scheduled by adopting multiple PDCCHs, the transmissions of the scheduled PDSCHs may be performed in the same slot or different slots. The terminal device needs to support simultaneously receiving the PDCCH and the PDSCH from different TRPs.

It is to be noted that the terminal device may feed back the ACK/NACK and CSI to different TRPs performing the transmissions of the respective PDSCHs. This scenario may be applied to two cases of the ideal backhaul and non-ideal backhaul. The terminal device may also combine the ACK/NACK and the CSI and feed back to one TRP. This scenario may be applied to the case of the ideal backhaul.

It is further to be noted that the DCI used for scheduling the PDSCHs transmitted by different TRPs may be carried by different CORESETs. That is to say, the network device side may configure multiple CORESETs, and each TRP adopts a respective CORESET to carry the DCI. In this case, the different TRPs may be distinguished by the CORESETs. For example, the network device may configure one CORESET index for each CORESET, and different CORESET indexes correspond to different TRPs.

It is further to be noted that when the terminal device feeds back the CSI, it is necessary to feed back the CSI corresponding to each TRP. The CSI may include RI, PMI, CQI, and the like, and each TRP may schedule the downlink transmission by using the CSI obtained by the TRP.

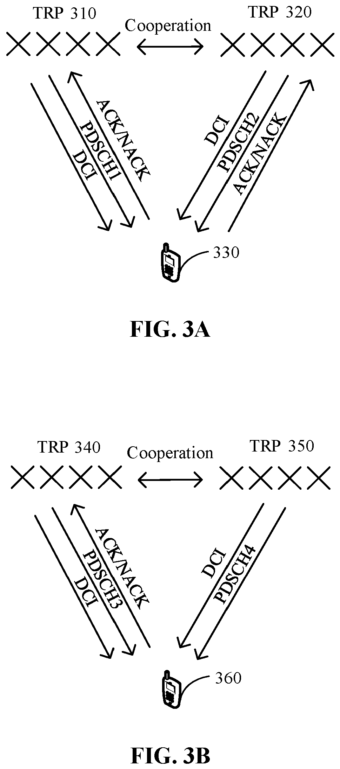

FIG. 3A is a first schematic diagram of a scenario of multi-PDCCH downlink non-coherent transmission. As illustrated in FIG. 3A, it is assumed that there are two TRPs, denoted as TRP 310 and TRP 320, respectively. The TRP 310 and TRP 320 may cooperate with each other. The TRP 310 may send a PDCCH1 and a PDSCH1 to the terminal device 330, and the TRP 320 may send a PDCCH2 and a PDSCH2 to the terminal device 330. The terminal device 330 may respectively feed back the ACK/NACK and the CSI to different TRPs (i.e., the TRP 310 and the TRP 320) performing the transmission of the respective PDSCHs. Herein, the DCI used for scheduling the PDSCH1 transmitted by the TRP 310 may be carried by a CORESET1, and the DCI used for scheduling the PDSCH2 transmitted by the TRP 320 may be carried by a CORESET2.

FIG. 3B is a second schematic diagram of a scenario of multi-PDCCH downlink non-coherent transmission. As illustrated in FIG. 3B, it is assumed that there are two TRPs, denoted as TRP 340 and TRP 350, respectively. The TRP 340 and TRP 350 may cooperate with each other. The TRP 340 may send a PDCCH3 and a PDSCH3 to the terminal device 360, and the TRP 350 may send a PDCCH4 and a PDSCH4 to the terminal device 360. The terminal device 360 may combine the ACK/NACK and the CSI and feed back to one TRP (i.e., the TRP 340). Herein, the DCI used for scheduling the PDSCH3 transmitted by the TRP 340 may be carried by a CORESET3, and the DCI used for scheduling the PDSCH4 transmitted by the TRP 350 may be carried by a CORESET4.

In another possible implementation, for downlink transmissions scheduled by a single PDCCH, the same DCI may schedule multiple transport layers from different TRPs. The multiple transport layers from different TRPs adopt Demodulation Reference Signal (DMRS) ports in different Command Data Module (CDM) groups and adopt different TCI states. The network device needs to indicate, in one DCI, DMRS ports from different CDM groups and TCI states corresponding to different CDM groups, so as to support different DMRS ports to use different beams to perform the transmission. In this case, mechanisms in existing protocols may be reused for the Hybrid Automatic Repeat Request (HARQ)-ACK feedback. This scenario may be applied to the case of the ideal backhaul.

It is to be noted that the terminal device needs to report, in one CSI, RIs and PMIs corresponding to different TRPs and a joint CQI. The joint CQI may be used for determining a Modulation and Coding Scheme (MCS). The network device may configure the terminal device to report CSI respectively corresponding to multiple different transmission assumptions, for example, report both the CSI corresponding to the single-TRP-based transmission assumption and the CSI corresponding to the transmission assumption made based on multi-TRP NC-JT. In addition, the network device may configure the terminal device to report the transmission assumption with the best performance among multiple different transmission assumptions and the CSI corresponding to the transmission assumption with the best performance, thereby saving feedback signaling overhead.

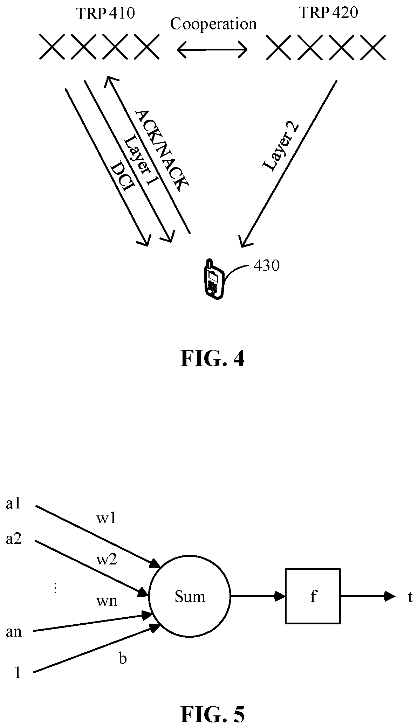

FIG. 4 is a schematic diagram of a scenario of a single-PDCCH downlink non-coherent transmission. As illustrated in FIG. 4, it is assumed that there are two TRPs, denoted as TRP 410 and TRP 420, respectively. The TRP 410 and TRP 420 may cooperate with each other. The DCI transmitted by the TRP 410 may be carried through the CORESET. The DCI may schedule both the transport layer (i.e. Layer 1) from the TRP 410 and the transport layer (i.e. Layer 2) from the TRP 420. The terminal device 430 may combine the ACK/NACK and the CSI and feed back to one TRP (i.e., TRP 410).

The AI model is a model capable of handling a variety of task processing. The AI model has the capabilities of self-learning and self-adaptation, and may perform dynamic adjustments and decisions according to changes in the environment. The AI model may also be called as a Machine Learning (ML) model, and the two are equivalent or replaceable.

In practical applications, The AI model may be composed of the neural network. The neural network is an operation model formed by multiple neuron nodes connected with each other. The connections between nodes represent the weighted values from the input signals to the output signal, and are called weights. The weighted summation is performed on different input signals at each node and output is performed through a specific activation function. With reference to the schematic structural diagram of a neuron illustrated in FIG. 5, a1, a2, ..., an and 1 represent the inputs of the neuron, w1, w2, ..., wn and b represent the weights, Sum represents the summation function, f represents the activation function, and t represents the output result.

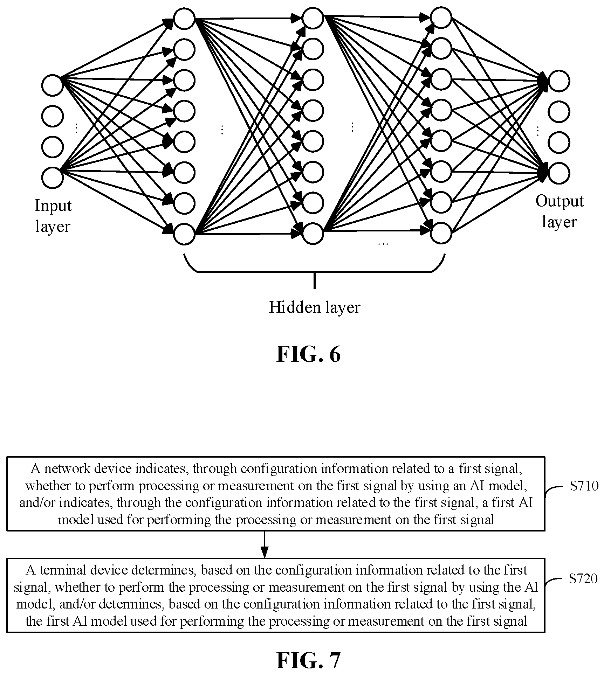

A simple neural network, as illustrated in FIG. 6, includes an input layer, hidden layers and an output layer. Through different connection manners between multiple neurons, different weights and different activation functions, different outputs may be generated, thereby fitting mapping relationships from the inputs to the outputs. Each previous-level node is connected to all of its next-level nodes. The fully connected model may also be called as a Deep Neural Network (DNN).

An AI model may be trained and obtained through the processes of construction, training, verification and testing of a data set. The training may be classified into offline training and online training. The network device may obtain a static training result through the offline training of the data set, which may be called as the offline training. In the procedure of the network device or the terminal device using the AI model, with further measurements and/or reporting by the terminal device, the network device may continue to collect more data, and perform the realtime online training to optimize the parameters of the AI model, thereby achieving better inference and prediction results. After the AI model is obtained, by inputting the currently obtained information into the AI model, a corresponding model output may be obtained by inferring.

In order to implement different communication functions, different AI models are introduced into the communication system to define inputs and outputs corresponding to the communication functions.

Exemplarily, when the AI model is used for the CSI feedback, the obtained channel information (such as feature vectors, beam information, delay information) may be used as the inputs of the AI model, thereby inferring corresponding CSI quantized bits. A corresponding AI model may exist at the network side. The CSI quantized bits are used as the inputs, and the corresponding channel information can be obtained by inferring.

Exemplarily, when the AI model is used for beam management, the terminal device may use Reference Signal Receiving Powers (RSRP) corresponding to the multiple beams in the measured second beam (represented by the CSI-RS resource index) set as the inputs of the AI model, thereby inferring to obtain the best beam (represented by the CSI-RS resource index) in the first beam set and the RSRP corresponding to the best beam; and the terminal device may report the inferred result to the network device. Herein, the second beam set may be a subset of the first beam set.

In addition, the AI model may also be used for other communication procedures, such as positioning, channel encoding, channel decoding, modulation and demodulation, and channel estimation.

In the related art, when the communication procedure is assisted by the AI model, the AI model used for the uplink and downlink communication procedure is usually trained based on the cell/TRP. When the cell/TRP changes, the terminal device needs to switch into the AI model corresponding to the cell/TRP for communication to ensure the communication performance. However, the cell/TRP for the transmission of the signal is usually invisible to the terminal device, and some cells/TRPs do not support the AI model-based signal transmission. At present, there is no clear method for how the terminal device determines whether to perform the processing and measurement on the current signal by using the AI model and which AI model.

In addition, in the communication system, in order to implement different functions (such as the beam management, the CSI measurement, the positioning), the network device may configure different types of reference signals for related measurement and reporting of different communication functions. If the measurement and reporting are based on the AI model, it is necessary to use different AI models for the measurement and reporting in order to implement different functions. However, the function of the reference signal configured by the network device is also usually invisible to the terminal device. In the case where the function of the reference signal is invisible to the terminal device, how to enable the terminal device to know the AI model corresponding to the function supported by the current reference signal is a problem to be solved.

In view of this, the embodiments of the present disclosure provide a method for signal processing. The terminal device determines, according to the configuration information related to the first signal, whether to perform the processing or measurement on the first signal by using the AI model, and/or the first AI model used for performing the processing or measurement on the first signal. Herein, the configuration information related to the first signal may be configuration information associated with the function of the TRP/cell/signal, such as, the reference signal configuration information, the CSI reporting configuration information, the TCI state, the CORESET group index information, or the PCI information. In this way, the network device may indicate, to the terminal device through the configuration information related to the first signal, whether to perform the processing or measurement on the first signal by using the AI model, based on whether the function of the TRP/cell/signal supports the AI model-based transmission, so as to enable the terminal device to select an optimal method to perform the processing or measurement on the first signal. In addition, since the configuration information related to the first signal is associated with the function of the TRP/cell/signal, the network device is able to configure different AI models for different TRP/cell/signal functions through the configuration information related to the first signal. In this way, the AI model specific to the function of the TRP/cell/signal can be implemented, thereby improving the performance of the AI model-based transmission.

In order to facilitate understanding of the technical solutions of the embodiments of the present disclosure, the technical solutions of the present disclosure will be described in detail below through specific embodiments. The above related technologies used as optional solutions may be combined with technical solution of the embodiments of the present disclosure in various ways, and the combinations belong to the scope of protection of the embodiments of the present disclosure. Embodiments of the present disclosure include at least some of the following content.

FIG. 7 shows a schematic flowchart of a method for signal processing according to an embodiment of the present disclosure. As illustrated in FIG. 7, the method may include a following operation.

In operation S710, a network device indicates, through configuration information related to a first signal, whether to perform processing or measurement on the first signal by using an AI model, and/or indicates, through the configuration information related to the first signal, a first AI model used for performing the processing or measurement on the first signal.

In operation S720, a terminal device determines, based on the configuration information related to the first signal, whether to perform the processing or measurement on the first signal by using the AI model, and/or determines, based on the configuration information related to the first signal, the first AI model used for performing the processing or measurement on the first signal.

It is to be noted that the first signal may be one or more of: a reference signal, a control signal, and a data signal.

In some embodiments, the reference signal may be an uplink reference signal, such as, a Sounding Reference Signal (SRS), an uplink Demodulation Reference Signal (DMRS), or the like. The reference signal may also be a downlink reference signal, such as, a Channel State Information Reference Signal (CSI-RS), a downlink DMRS, a cell-specific reference signal (CRS), or the like, which is not limited in the embodiments of the present disclosure.

In some embodiments, the control signal may include a Physical Uplink Control Channel (PUCCH), a PDCCH, and the like, which is not limited in the embodiments of the present disclosure.

In some embodiments, the data signal may include a Physical Uplink Shared Channel (PUSCH), a PDSCH, and the like, which is not limited in the embodiments of the present disclosure.

It is to be understood that the network device may configure the first signal for the terminal device. For example, the network device may configure, for the terminal device, a time-frequency resource for performing transmission/detection on the first signal, a time-frequency resource for scheduling a PDCCH of the first signal, a spatial transmission relationship of the first signal (represented by using a TCI state), a Physical Cell Identifier (PCI) associated with the first signal, and the like, which is not limited in the embodiments of the present disclosure.

In the embodiments of the present disclosure, the network device indicates, to the terminal device through the configuration information related to the first signal, whether to perform the processing or measurement on the first signal by using the AI model, and/or indicates, through the configuration information related to the first signal, the first AI model used for performing the processing or measurement on the first signal. Correspondingly, the terminal device determines, based on the configuration information related to the first signal, whether to perform the processing or measurement on the first signal by using the AI model, and/or the first AI model used for performing the processing or measurement on the first signal.

In a possible implementation, the network device may indicate, to the terminal device through the configuration information related to the first signal, whether to perform the processing or measurement on the first signal by using the AI model. Correspondingly, the terminal device may determine, based on the configuration information related to the first signal, whether to perform the processing or measurement on the first signal by using the AI model. It is to be noted that in the case where the network device indicates, to the terminal device through the configuration information related to the first signal, whether to perform the processing or measurement on the first signal by using the AI model, the terminal device may perform the processing or measurement on the first signal by using a default AI model. Herein, the default AI model may be a predefined AI model or an AI model pre-configured by the network device for the terminal device, which is not limited in the embodiments of the present disclosure.

In another possible implementation, the network device may indicate, to the terminal device through the configuration information related to the first signal, a specific AI model (denoted as the first AI model in the embodiments of the present disclosure) used for performing the processing or measurement on the first signal. Correspondingly, the terminal device may determine, based on the configuration information related to the first signal, the first AI model used for performing the processing or measurement on the first signal.

In yet another possible implementation, the network device may indicate, to the terminal device through the configuration information related to the first signal, whether to perform the processing or measurement on the first signal by using the AI model, and the first AI model used for performing the processing or measurement on the first signal. Correspondingly, the terminal device determines, based on the configuration information related to the first signal, whether to perform the processing or measurement on the first signal by using the AI model, and the first AI model used for performing the processing or measurement on the first signal.

It is to be noted that when the network device indicates, to the terminal device through the configuration information related to the first signal, performing the processing or measurement on the first signal by using the AI model, the network device may further indicate, to the terminal device, the AI model (denoted as the first AI model in the embodiments of the present disclosure) used for performing the processing or measurement on the first signal.

In some embodiments, the configuration information related to the first signal may include any of:
reference signal configuration information for configuring the first signal;
CSI reporting configuration information associated with the first signal;
a TCI state associated with the first signal;
CORESET group index information associated with the first signal; and
PCI information associated with the first signal.

Exemplarily, the configuration information related to the first signal may be the reference signal configuration information for configuring the first signal. In this case, the first signal may be a reference signal. The reference signal configuration information indicates a first reference signal resource set, and the first reference signal resource set may include one or more reference signal resources. The one or more reference signal resources are used for performing transmission of the first signal. That is to say, the resources for the transmission/detection of the first signal are indicated by the reference signal configuration information.

It is to be understood that the network device indicates, to the terminal device through the reference signal configuration information of the first signal, whether to perform the processing or measurement on the first signal by using the AI model, and/or indicates, to the terminal device through the reference signal configuration information of the first signal, the first AI model used for performing the processing or measurement on the first signal. Correspondingly, the terminal device determines, based on the reference signal configuration information of the first signal, whether to perform the processing or measurement on the first signal by using the AI model, and/or the first AI model used for performing the processing or measurement on the first signal.

Exemplarily, the configuration information related to the first signal may be the CSI reporting configuration information associated with the first signal, and the CSI reporting configuration information herein is used for configuring CSI measurement that is based on the first signal and CSI reporting. The CSI reporting configuration information may include indication information of a second reference signal resource set. The second reference signal resource set may include one or more reference signal resources. The one or more reference signal resources herein are used for performing the transmission of the first signal, The resources for the transmission/detection of the first signal are indicated by the CSI reporting configuration information.

It is to be understood that the network device indicates, to the terminal device through the CSI reporting configuration information associated with the first signal, whether to perform the processing or measurement on the first signal by using the AI model, and/or indicates, to the terminal device through the CSI reporting configuration information associated with the first signal, the first AI model used for performing the processing or measurement on the first signal. Correspondingly, the terminal device determines, based on the CSI reporting configuration information associated with the first signal, whether to perform the processing or measurement on the first signal by using the AI model, and/or the first AI model used for performing the processing or measurement on the first signal.

Exemplarily, the configuration information related to the first signal may be the TCI state associated with the first signal. It is to be noted that the TCI state associated with the first signal may be a TCI state configured by the network device for the first signal, and may be used for the processing of the first signal by the receiving end.

It is to be understood that the network device indicates, to the terminal device through the TCI state associated with the first signal, whether to perform the processing or measurement on the first signal by using the AI model, and/or indicates, to the terminal device through the TCI state associated with the first signal, the first AI model used for performing the processing or measurement on the first signal. Correspondingly, the terminal device determines, based on the TCI state associated with the first signal, whether to perform the processing or measurement on the first signal by using the AI model, and/or the first AI model used for performing the processing or measurement on the first signal.

Exemplarily, the configuration information related to the first signal may be the CORESET group index information associated with the first signal. It is to be noted that the CORESET group index information associated with the first signal is CORESET group index information of a CORESET where the first PDCCH is located, and the first PDCCH is a PDCCH used for scheduling the first signal. That is to say, the CORESET group index information associated with the first signal is CORESET group index information of a CORESET where the PDCCH for scheduling the first signal is located.

It is to be understood that the network device indicates, to the terminal device through the CORESET group index information associated with the first signal, whether to perform the processing or measurement on the first signal by using the AI model, and/or indicates, to the terminal device through the CORESET group index information associated with the first signal, the first AI model used for performing the processing or measurement on the first signal. Correspondingly, the terminal device determines, based on the CORESET group index information associated with the first signal, whether to perform the processing or measurement on the first signal by using the AI model, and/or the first AI model used for performing the processing or measurement on the first signal.

Exemplarily, the configuration information related to the first signal may be the PCI information associated with the first signal. It is to be understood that the PCI information associated with the first signal is PCI information used for generating a sequence of the first signal, and the PCI information associated with the first signal may further be PCI information configured in a TCI state of the first signal, which is not limited in the embodiments of the present disclosure.

It is to be understood that the network device indicates, to the terminal device through the PCI information associated with the first signal, whether to perform the processing or measurement on the first signal by using the AI model, and/or indicates, to the terminal device through the PCI information associated with the first signal, the first AI model used for performing the processing or measurement on the first signal. Correspondingly, the terminal device determines, based on the PCI information associated with the first signal, whether to perform the processing or measurement on the first signal by using the AI model, and/or the first AI model used for performing the processing or measurement on the first signal.

In some embodiments, the operation of performing the processing on the first signal by using the AI model may include the following operation.

One or more of signal generation, precoding, modulation, channel encoding, demodulation, channel decoding and channel detection are performed on the first signal by using the AI model.

Herein, the operation of performing the signal generation of the first signal by using the AI model may include: information to be transmitted is used as the input of the AI model, and the first signal is generated and outputted through the AI model. Exemplarily, the first signal may be a PUCCH or a PUSCH carrying CSI reporting, and the terminal device may use the channel information (for example, the feature vector, the beam information, the delay information, etc.) obtained by using the AI model as the input to the AI model, to infer the first signal through the AI model.

The operation of performing the precoding on the first signal by using the AI model may be that the first signal that is not precoded is used as the input of the AI model, and inference is performed through the AI model to obtain the precoded first signal.

The operation of performing the modulation on the first signal by using the AI model may be that information bits of the data to be transmitted (i.e., the first signal) are used as the input of the AI model, and the modulated first signal is outputted.

The operation of performing the demodulation on the first signal by using the AI model may be that the received modulated first signal is used as the input of the AI model, and the demodulated information bits are outputted.

The operation of performing the channel encoding on the first signal by using the AI model may be that information bits to be transmitted (i.e., the first signal) are used as the input of the AI model, and the encoded first signal is outputted.

The operation of performing the channel decoding on the first signal by using the AI model may be that the received encoded first signal is used as the input of the AI model, and the decoded information bits are outputted.

The operation of performing the channel detection on the first signal by using the AI model may be that the first signal is used as the input of the AI model, and the channel information (e.g., the feature vector, the beam information, the delay information, etc.) for the transmission of the first signal is outputted.

In some embodiments, the operation of performing the measurement on the first signal by using the AI model may include the following two operations.

The terminal device obtains downlink channel information based on the measurement of the first signal.

The terminal device uses the downlink channel information as an input of the AI model to obtain a target measurement result.

It is to be noted that the downlink channel information obtained based on the measurement of the first signal may be a physical quantity reflecting the channel state obtained based on the measurement of the first signal, such as, a channel covariance matrix R, a channel matrix H, a feature value of a channel, a feature vector of a channel, a channel impulse response, a delay power spectrum of a channel, a strength (such as RSRP) of a channel, an angle (e.g., the Angle of Arrival (AOA)) of a channel, and the like, which is not limited in the present disclosure.

In addition, the target measurement result may be several measurement values required for the network device to perform the scheduling/positioning/beam management, such as precoding indication information, RI, CQI, RSRP, SINR, beam index, positioning result, positioning error, timing information, Time-Domain Channel Characteristic (TDCP), channel estimation value, which is not limited in the embodiments of the present disclosure.

Exemplarily, when the first signal and the AI model are used for the traditional CSI measurement, the terminal device may use a feature vector of a downlink channel obtained based on the measurement of the first signal as the input of the AI model, thereby outputting and obtaining corresponding PMI information.

Exemplarily, when the first signal and the AI model are used for the beam management, the first signal may be a group of CSI-RSs, and the terminal device may use the corresponding RSRPs obtained based on the measurement of the CSI-RSs as the input of the AI model, thereby outputting and obtaining the index of the predicted beam with the best performance and the RSRP corresponding to the beam with the best performance.

It is to be noted that, in the embodiments of the present disclosure, the operation of performing the processing or measurement on the first signal without using the AI model may mean that the processing or measurement is performed on the first signal by using a non-AI/ML manner. That is to say, the processing or measurement is performed on the first signal in a traditional manner. Exemplarily, when the network device indicates, to the terminal device, performing the first signal-based CSI measurement without using the AI model, the terminal device may perform the CSI measurement that is based on the first signal and reporting by using a codebook-based manner.

In some embodiments, before the operation S710, the network device may determine, in advance, whether to perform the processing or measurement on the first signal by using the AI model, and/or the first AI model used for performing the processing or measurement on the first signal. Therefore, the network device indicates, through the configuration information related to the first signal, whether to perform the processing or measurement on the first signal by using the AI model, and/or the first AI model used for performing the processing or measurement on the first signal.

In some embodiments, the network device determines whether to perform the processing or measurement on the first signal by using the AI model and/or the first AI model used for performing the processing or measurement on the first signal, based on one or more of:
a TRP for the transmission of the first signal,
a cell for the transmission of the first signal, and
a function of the first signal.

In a possible implementation, the network device may determine, according to whether the TRP for the transmission of the first signal supports the AI model-based communication procedure, whether to perform the processing or measurement on the first signal by using the AI model. If the TRP for the transmission of the first signal supports the AI model-based communication procedure, i.e., the TRP may perform the interaction of the first signal with the terminal device by using the AI model, the network device may indicate, to the terminal device through the configuration information related to the first signal, performing the processing or measurement on the first signal by using the AI model. On the contrary, if the TRP for the transmission of the first signal does not support the AI model-based communication procedure, the network device may indicate, to the terminal device through the configuration information related to the first signal, performing the processing or measurement on the first signal without using the AI model.

Furthermore, different TRPs correspond to different AI models. In other words, different TRPs support different AI models, i.e., when the TRPs for the transmission of the first signal are different, the used AI models are different. It is to be noted that since different TRPs have different geographical locations, scattering environments, and the like, different channel parameters between different TRPs and terminal device may be different. Therefore, different TRPs need to use different AI models, so as to obtain the most accurate processing or measurement effect of the first signal.

It is to be noted that the network device or the terminal device may determine the AI model corresponding to each TRP by pre-training. If the AI model corresponding to each TRP is pre-trained by the terminal device, the terminal device may report the AI model corresponding to each TRP to the network device through the UE capability information.

Based on this, the network device may use the AI model corresponding to the TRP for the transmission of the first signal as the first AI model used for the processing or measurement of the first signal. Furthermore, through the configuration information related to the first signal, the network device indicates, to the terminal device, both performing the processing or measurement on the first signal by using the AI model and the first AI model used for performing the processing or measurement on the first signal. Alternatively, the network device may directly indicate, to the terminal device through the configuration information related to the first signal, the first AI model used for performing the processing or measurement on the first signal.

In another possible implementation, the network device may determine, according to whether the cell for the transmission of the first signal supports the AI model-based communication procedure, whether to perform the processing or measurement on the first signal by using the AI model. If the cell for the transmission of the first signal supports the AI model-based communication procedure, the network device may indicate, to the terminal device through the configuration information related to the first signal, performing the processing or measurement on the first signal by using the AI model. On the contrary, if the cell for the transmission of the first signal does not support the AI model-based communication procedure, the network device may indicate, to the terminal device through the configuration information related to the first signal, performing the processing or measurement on the first signal without using the AI model.

In addition, different cells correspond to different AI models. In other words, different cells support different AI models. The network device may use the AI model corresponding to the cell for the transmission of the first signal as the first AI model used for the processing or measurement of the first signal. Furthermore, the network device indicates, to the terminal device through the configuration information related to the first signal, both performing the processing or measurement on the first signal by using the AI model and the first AI model used for performing the processing or measurement on the first signal. Alternatively, the network device may directly indicate, to the terminal device through the configuration information related to the first signal, the first AI model used for performing the processing or measurement on the first signal.

It is to be noted that different TRPs may be configured with the same cell ID or different cell IDs. When different TRPs have different cell IDs, different TRPs are different cells.

In yet another possible implementation, the network device may determine, according to whether the function of the first signal supports the AI model-based processing, whether to perform the processing or measurement on the first signal by using the AI model.

It is to be noted that the function of the first signal includes, but is not limited to, being used for the CSI measurement, being used for the beam management, being used for the positioning of the terminal device, being used for the time-frequency synchronization, and the like, which is not limited in the embodiments of the present disclosure. Herein, the function of the first signal may be further subdivided. For example, the CSI measurement may be further subdivided into several of RSRP measurement, SINR measurement, measurement of channel information (e.g. RI/PMI/CQI) for scheduling, single TRP measurement, CJT measurement, Non-Coherent Joint Transmission (NCJT) measurement, sub-band measurement, and wide-band measurement. The beam management may be further subdivided into several of time-domain beam prediction, spatial-domain beam prediction, transmit beam selection, etc. The positioning may be further subdivided into location information reporting, channel information reporting for positioning, timing information reporting, and the like.

It is to be understood that whether the function of the first signal supports the AI model-based processing may refer to whether the network device and the terminal device are able to perform the processing on the first signal having the function by using the AI model. If the function of the first signal supports the AI model-based processing, i.e., the network device and the terminal device are able to perform the processing on the first signal having the function by using the AI model, the network device may indicate, to the terminal device through the configuration information related to the first signal, performing the processing or measurement on the first signal by using the AI model. On the contrary, the function of the first signal does not support the AI model-based processing, i.e., the network device and the terminal device are unable to perform the processing on the first signal having the function by using the AI model, the network device may indicate, to the terminal device through the configuration information related to the first signal, performing the processing or measurement on the first signal without using the AI model.

The network device and the terminal device have different method for the processing of the first signal having different functions. Therefore, different functions of the first signal may correspond to different AI models. It is to be noted that the network device or the terminal device may determine the corresponding AI model for implementing each function by pre-training. If the AI model corresponding to each function is pre-trained by the terminal device, the terminal device may report the AI model corresponding to each function to the network device through the UE capability information.

Based on this, the network device may use the AI model corresponding to the function of the first signal as the first AI model used for the processing or measurement of the first signal. Furthermore, the network device indicates, to the terminal device through the configuration information related to the first signal, both performing the processing or measurement on the first signal by using the AI model and the first AI model used for performing the processing or measurement on the first signal. Alternatively, the network device may directly indicate, to the terminal device through the configuration information related to the first signal, the first AI model used for performing the processing or measurement on the first signal.

It is to be understood that the network device indicates, to the terminal device in an explicit manner, whether to perform the processing or measurement on the first signal by using the AI model, and/or indicates, to the terminal device in the explicit manner, the first AI model used for performing the processing or measurement on the first signal. Exemplarily, the network device may add indication information into the configuration information related to the first signal, and clearly indicates, through the indication information, whether to perform the processing or measurement on the first signal by using the AI model, and/or clearly indicates, through the indication information, the first AI model used for performing the processing or measurement on the first signal (for example, indicating through the ID of the first AI model or the function). In addition, the network device indicates, to the terminal device in an implicit manner, whether to perform the processing or measurement on the first signal by using the AI model, and/or indicates, to the terminal device in the implicit manner, the first AI model used for performing the processing or measurement on the first signal. Exemplarily, the network device may establish an association relationship between a certain parameter (for example, any one of the reference signal resource, the CSI reporting configuration information, the TCI state, the CORESET group index information, and the PCI information) in the configuration information related to the first signal and the AI model. In this way, the network device may indicate, by using the AI model associated with the certain parameter in the configuration information related to the first signal, whether to perform the processing or measurement on the first signal by using the AI model, and/or indicate, by using the AI model associated with the certain parameter in the configuration information related to the first signal, the first AI model used for performing the processing or measurement on the first signal.

It is further to be noted that an input structure and/or an output structure of the first AI model is pre-agreed between the terminal device and the network device, or pre-configured by the network device for the terminal device.

In conclusion, through the method, the terminal device is able to determine, according to the configuration information related to the first signal, whether to perform the processing or measurement on the first signal by using the AI model, and/or the first AI model used for performing the processing or measurement on the first signal. Herein, the configuration information related to the first signal may be configuration information associated with the function of the TRP/cell/signal, such as, the reference signal configuration information, the CSI reporting configuration information, the TCI state, the CORESET group index information, or the PCI information. In this way, the network device may indicate, to the terminal device through the configuration information related to the first signal, whether to perform the processing or measurement on the first signal by using the AI model, based on whether the function of the TRP/cell/signal supports the AI model-based transmission, so as to enable the terminal device to select an optimal manner to perform the processing or measurement on the first signal. In addition, since the configuration information related to the first signal is associated with the function of the TRP/cell/signal, the network device is able to configure different AI models for different TRP/cell/signal functions through the configuration information related to the first signal. In this way, the AI model specific to the function of the TRP/cell/signal can be implemented, thereby improving the performance of the AI model-based transmission.

It is to be noted that, in operation S710, there are multiple manners where the network device indicates, through the configuration information related to the first signal, whether to perform the processing or measurement on the first signal by using the AI model, and/or the first AI model used for performing the processing or measurement on the first signal. Correspondingly, in operation S720, there are multiple manners where the terminal device determines, based on the configuration information related to the first signal, whether to perform processing or measurement on the first signal by using the AI model, and/or the first AI model used for performing the processing or measurement on the first signal. Hereinafter, details will be described with reference to a manner #1 to a manner#7.

In the manner #1, the configuration information related to the first signal is the reference signal configuration information for configuring the first signal. The reference signal configuration information includes first indication information, and the first indication information is used for indicating whether to perform the processing or measurement on the first signal by using the AI model, and/or the first AI model.

It is to be understood that the first signal may be a reference signal. The network device may add new indication information (denoted as the first indication information in the embodiments of the present disclosure) into the reference signal configuration information to indicate, to the terminal device, whether to perform the processing or measurement on the first signal by using the AI model, and/or the first AI model.

In some embodiments, the first indication information may indicate only whether to perform the processing or measurement on the first signal by using the AI model. It is to be noted that in the embodiment, when the first indication information indicates performing the processing or measurement on the first signal by using the AI model, the terminal device may perform the processing or measurement on the first signal by using a default AI model.

In a possible implementation, the first indication information includes 1-bit information. When a value of the first indication information is a first value (for example, 1), it indicates performing the processing or measurement on the first signal by using the AI model. When the value of the first indication information is a second value (for example, 0), it indicates performing the processing or measurement on the first signal without using the AI model.

In another possible implementation, when the first indication information is default, it indicates performing the processing or measurement on the first signal without using the AI model. When the first information is present, it indicates performing the processing or measurement on the first signal by using the AI model. That is to say, when the first indication information does not exist in the reference signal configuration information, it indicates performing the processing or measurement on the first signal without using the AI model. When the first indication information exists in the reference signal configuration information, it indicates performing the processing or measurement of the first signal by using the AI model.

In some embodiments, the first indication information may indicate only the first AI model.

Herein, when the first indication information is used for indicating the first AI model, the first indication information indicates a function of the first AI model and/or identification information (i.e., the ID) of the first AI model.

It is to be noted that the function of the model is a function implemented through the AI model. The function of the model includes, but is not limited to, PMI reporting, RI/PMI/CQI reporting, beam information reporting, RSRP reporting, CSI compression, channel encoding and decoding, modulation and demodulation, CSI prediction, CSI prediction and compression, etc.

In some embodiments, different AI models may have different model functions. In addition to directly indicating the ID of the first AI model, the first indication information may also directly indicate the function of the first AI model. The first AI model may be determined through the function of the model. Exemplarily, the first indication information may carry a function ID of the first AI model, and the first AI model is indicated through the function ID.

In some embodiments, one function of the model may correspond to multiple AI models. In this case, the first indication information may indicate both the function of the model and a model ID supporting the function, and the first AI model is jointly determined by the function of the model and the model ID.

It is to be noted that an input structure and/or an output structure of the first AI model is predefined by the terminal device and the network device in advance, or pre-configured by the network device for the terminal device. Exemplarily, the first AI model may be pre-trained by the terminal device and reported to the network device through the UE capability information. Alternatively, the first AI model may be pre-trained by the network device and configured for the terminal device through the Radio Resource Control (RRC) signaling.

In some embodiments, the first indication information may indicate whether to perform the processing or measurement on the first signal by using the AI model and the first AI model used for performing the processing or measurement on the first signal.

In a possible implementation, the first indication information may include a first indication field and a second indication field. The first indication field is used for indicating whether to perform the processing or measurement on the first signal by using the AI model. Exemplarily, the first indication field includes 1-bit information. When a value of the first indication field is a first value (for example, 1), it indicates performing the processing or measurement on the first signal by using the AI model. When the value of the first indication field is a second value (for example, 0), it indicates performing the processing or measurement on the first signal without using the AI model. In addition, the second indication field is used for indicating the first AI model. The second indication field indicates a function of the first AI model or identification information of the first AI model.

It is to be noted that when the first indication field indicates performing the processing or measurement on the first signal without using the AI model, the second indication field may be default, or the second indication field is an invalid indication field.

In another possible implementation, the first indication information includes multiple indication states. A first indication state among the multiple indication states indicates performing the processing or measurement on the first signal without using the AI model, and other indication states among the multiple indication states are used for indicating the first AI model used for performing the processing or measurement on the first signal.

It is to be understood that when the first indication information is the first indication state, the terminal device may determine to perform the processing or measurement on the first signal without using the AI model. When the first indication information is another indication state, the terminal device may use the AI model corresponding to the indication state as the first AI model used for performing the processing or measurement on the first signal.

Exemplarily, the first indication state may have a fixed value, for example, the first indication state is a value with all 0 or all 1. The another indication state may indicate a function of the AI model or a model ID of the AI model.

In another possible implementation, the first indication information indicates a function of the AI model. The first function is used for indicating performing the processing or measurement on the first signal without using the AI model, and another function is used for indicating a function implemented by using the AI model (furthermore, the terminal device may determine, according to the function, the first AI model used for performing the processing or measurement on the first signal).

It is to be understood that the first indication information may indicate the function of the AI model, and different values of the first indication information may correspond to functions of the different AI models. The AI model may have multiple functions, and a specific function (denoted as the first function in the embodiments of the present disclosure) among the multiple functions may indicate performing the processing or measurement on the first signal without using the AI model. That is to say, when the first indication information indicates the first function, the terminal device may determine to perform the processing or measurement on the first signal without using the AI model. When the first indication information indicates another function, the terminal device may use the AI model corresponding to the function indicated by the first indication information as the first AI model used for performing the processing or measurement on the first signal.

In yet another possible implementation, the first indication information indicates identification information of the AI model. The first identification information is used for indicating performing the processing or measurement on the first signal without using the AI model, and another piece of identification information is used for indicating the first AI model used for performing the processing or measurement on the first signal.

It is to be understood that the first indication information may indicate the ID of the AI model. Herein, a piece of specific identification information (herein, denoted as first identification information, for example, ID = 0, 1 or other values), it may indicate performing the processing or measurement on the first signal without using the AI model. That is to say, when the first indication information indicates the first identification information, the terminal device may determine to perform the processing or measurement on the first signal without using the AI model. When the first indication information indicates another piece of identification information, the terminal device may use the AI model corresponding to the identification information indicated by the first indication information as the first AI model used for performing the processing or measurement on the first signal.

It is to be noted that for a case where the function of the model corresponds to multiple AI models, the first indication information may indicate both the function of the AI model and the ID of one model supporting the function. Exemplarily, when the first indication information indicates any one of the first function or the first identification information, it may indicate performing the processing or measurement on the first signal without using the AI model. When the first indication information indicates another function and another model ID, the terminal device may jointly determine the first AI model corresponding to the first signal according to the function and the model ID indicated by the first indication information.

In the manner #2, the configuration information related to the first signal is the CSI reporting configuration information associated with the first signal. The CSI reporting configuration information includes first indication information, and the first indication information is used for indicating whether to perform the processing or measurement on the first signal by using the AI model, and/or the first AI model.

The CSI reporting configuration information is used for configuring CSI measurement that is based on the first signal and CSI reporting.

In some embodiments, the CSI reporting configuration information includes indication information of a second reference signal resource set, and one or more reference signal resources in the second reference signal resource set are used for performing transmission of the first signal. In addition, the CSI reporting configuration information may further include CSI reporting quantity information used for indicating a target measurement result (for example, RI/PMI/CQI, RSRP, location information, etc.) to be outputted by the first AI model.

It is to be understood that the network device may add new indication information (denoted as the first indication information in the embodiments of the present disclosure) into the CSI reporting configuration information to indicate, to the terminal device, whether to perform the processing or measurement on the first signal by using the AI model, and/or the first AI model.

It is to be noted that the new indication information, together with the indication information of the second reference signal resource set and the CSI reporting quantity information, may be configured, as three independent information fields, in the CSI reporting configuration information.

The first indication information may indicate only whether to perform the processing or measurement on the first signal by using the AI model. The first indication information may further indicate only the first AI model. The first indication information may further indicate whether to perform the processing or measurement on the first signal by using the AI model and the first AI model used for performing the processing or measurement on the first signal.

It is to be noted that the description related to the first indication information can be understood with reference to the description related to the first indication information in the manner#1. For brevity, details are not elaborated herein again.

In the manner #3, the configuration information related to the first signal is the reference signal configuration information for configuring the first signal. The reference signal configuration information indicates a first reference signal resource set, and one or more reference signal resources included in the first reference signal resource set are used for performing transmission of the first signal.

In some embodiments, the network device indicates, through the reference signal configuration information, whether to perform the processing or measurement on the first signal by using the AI model, and/or the first AI model used for performing the processing or measurement on the first signal. Correspondingly, the terminal device determines, based on the reference signal configuration information, whether to perform the processing or measurement on the first signal by using the AI model, and/or the first AI model used for performing the processing or measurement on the first signal.

In an implementation, the network device indicates, through the reference signal configuration information, the first AI model used for performing the processing or measurement on the first signal. Correspondingly, the terminal device may determine, based on the reference signal configuration information, the first AI model used for the processing or measurement of the first signal.

In another implementation, the network device indicates, through the reference signal configuration information, whether to perform the processing or measurement on the first signal by using the AI model, and the first AI model used for performing the processing or measurement on the first signal. Correspondingly, the terminal device determines, based on the reference signal configuration information, whether to perform the processing or measurement on the first signal by using the AI model, and the first AI model used for performing the processing or measurement on the first signal.

It is to be understood that the first reference signal resource set may be associated with the AI model or may not be associated with the AI model. In a case where the first reference signal resource set does not have an associated AI model, the reference signal configuration information indicates performing the processing or measurement on the first signal without using the AI model. In a case where the first reference signal resource set has the associated AI model, the reference signal configuration information indicates performing the processing or measurement on the first signal by using the first AI mode. Furthermore, the reference signal configuration information may indicate that the first AI model is the AI model associated with the first reference signal resource set.

That is to say, the network device implicitly indicates, to the terminal device by using the first reference signal resource set indicated by the reference signal configuration information, whether to perform the processing or measurement on the first signal by using the AI model, and/or the first AI model used for performing the processing or measurement on the first signal.

It is to be noted that whether the first reference signal resource set is associated with the AI model and the AI model associated with the first reference signal resource set may be predefined, or may be configured by the network device, which is not limited in the embodiments of the present disclosure.

Exemplarily, the network device may configure, through RRC signaling, whether the first reference signal resource set is associated with the AI model, and the first AI model associated with the first reference signal resource set. If the first reference signal resource set is associated with the AI model, the network device may also dynamically update the first AI model associated with the first reference signal resource set through the Media Access Control (MAC) layer signaling or DCI signaling, thereby flexibly reusing the same reference signal resource set to implement different AI model configurations, to avoid frequent reconfiguration of the RRC signaling.

In some embodiments, the association relationship between the reference signal resource set and the AI model may be embodied by the association relationship between the reference signal resource set and the function of the AI model. When the terminal device determines the function of the first AI model through the reference signal resource set, the terminal device is able to determine the first AI model corresponding to the function. Exemplarily, the network device may pre-configure a function corresponding to each reference signal resource set through the RRC signaling; and the terminal device determines, according to the function, a pre-agreed/pre-configured AI model for implementing the function. When the function corresponding to the first CSI-RS resource set is CSI measurement, the AI model corresponding to the corresponding CSI-RS is an AI model 1. When the function corresponding to the second CSI-RS resource set is time-frequency tracking, the AI model corresponding to the corresponding CSI-RS is an AI model 2.

In some embodiments, the association relationship between the reference signal resource set and the AI model may be embodied by the correspondence between the reference signal resource set and the model ID of the AI model. When the terminal device determines the model ID of the first AI model through the reference signal resource set, the terminal device is able to determine the first AI model corresponding to the model ID.

In the manner #4, the configuration information related to the first signal is the CSI reporting configuration information associated with the first signal. The CSI reporting configuration information is used for configuring the CSI measurement that is based on the first signal and CSI reporting. The CSI reporting configuration information includes indication information of a second reference signal resource set, and one or more reference signal resources in the second reference signal resource set are used for performing the transmission of the first signal.

In some embodiments, the network device indicates, through the CSI reporting configuration information, whether to perform the processing or measurement on the first signal by using the AI model, and/or the first AI model used for performing the processing or measurement on the first signal. Correspondingly, the terminal device determines, through the CSI reporting configuration information, whether to perform processing or measurement on the first signal by using the AI model, and/or the first AI model used for performing the processing or measurement on the first signal.

In an implementation, the network device indicates, through the CSI reporting configuration information, the first AI model used for performing the processing or measurement on the first signal. Correspondingly, the terminal device may determine, through the CSI reporting configuration information, the first AI model used for the processing or measurement of the first signal.

In another implementation, the network device indicates, through the CSI reporting configuration information, whether to perform the processing or measurement on the first signal by using the AI model, and the first AI model used for performing the processing or measurement on the first signal. Correspondingly, the terminal device determines, through the CSI reporting configuration information, whether to perform processing or measurement on the first signal by using the AI model, and the first AI model used for performing the processing or measurement on the first signal.

It is to be understood that the CSI reporting configuration information may be associated with the AI model or may not be associated with the AI model. In a case where the CSI reporting configuration information does not have an associated AI model, the CSI reporting configuration information indicates performing the processing or measurement on the first signal without using the AI model. In a case where the CSI reporting configuration information has the associated AI model, the CSI reporting configuration information indicates that the terminal device performs the processing or measurement on the first signal by using the first AI model. Furthermore, the CSI reporting configuration information may indicate that the first AI model is the AI model associated with the CSI reporting configuration information.

That is to say, the network device implicitly indicates, to the terminal device by using the CSI reporting configuration information, whether to perform the processing or measurement on the first signal by using the AI model, and/or the first AI model used for performing the processing or measurement on the first signal.

It is to be noted that whether the CSI reporting configuration information is associated with the AI model and the AI model associated with the CSI reporting configuration information may be predefined, or may be configured by the network device, which is not limited in the embodiments of the present disclosure.

Exemplarily, whether the CSI reporting configuration information is associated with the AI model and the AI model associated with the CSI reporting configuration information may be determined in advance by the network device, and whether the CSI reporting configuration information is associated with the AI model and the first AI model associated with the CSI reporting configuration information may be configured for the terminal device. The network device may configure, through RRC signaling, whether the CSI reporting configuration information is associated with the AI model, and the first AI model associated with the CSI reporting configuration information. If the CSI reporting configuration information is associated with the AI model, the network device may also dynamically update the first AI model associated with the CSI reporting configuration information by the MAC layer signaling or the DCI signaling, thereby flexibly reusing the same CSI reporting configuration information to implement different AI model configurations, to avoid frequent reconfiguration of the RRC signaling.

In some embodiments, the association relationship between the CSI reporting configuration information and the AI model may be embodied by the association relationship between the CSI reporting configuration information and the function of the AI model. When the terminal device determines the function of the first AI model through the CSI reporting configuration information, the terminal device is able to determine the first AI model corresponding to the function.

Exemplarily, the network device may pre-configure a function corresponding to each piece of CSI reporting configuration information through the RRC signaling. The terminal device determines, according to the function, the pre-agreed/pre-configured AI model for implementing the function. Exemplarily, when the function corresponding to the first CSI reporting configuration information is CSI measurement, the AI model corresponding to the corresponding CSI-RS is an AI model 1. When the function corresponding to the second CSI reporting configuration information is time-frequency tracking, the AI model corresponding to the corresponding CSI-RS is an AI model 2.

In some embodiments, the correspondence between the CSI reporting configuration information and the AI model may be embodied by the correspondence between the CSI reporting configuration information and the model ID of the AI model. When the terminal device determines the model ID of the first AI model through the CSI reporting configuration information, the terminal device is able to determine the first AI model corresponding to the model ID.

In the manner#5, the configuration information related to the first signal is the TCI state associated with the first signal. The TCI state associated with the first signal is a TCI state configured by the network device for the first signal,

In some embodiments, the network device indicates, through the TCI state associated with the first signal, whether to perform the processing or measurement on the first signal by using the AI model, and/or the first AI model used for performing the processing or measurement on the first signal. Correspondingly, the terminal device determines, through the TCI state associated with the first signal, whether to perform processing or measurement on the first signal by using the AI model, and/or the first AI model used for performing the processing or measurement on the first signal.

In an implementation, the network device indicates, through the TCI state associated with the first signal, the first AI model used for performing the processing or measurement on the first signal. Correspondingly, the terminal device may determine, through the TCI state associated with the first signal, the first AI model used for the processing or measurement of the first signal.

In another implementation, the network device indicates, through the TCI state associated with the first signal, whether to perform the processing or measurement on the first signal by using the AI model, and the first AI model used for performing the processing or measurement on the first signal. Correspondingly, the terminal device determines, through the TCI state associated with the first signal, whether to perform processing or measurement on the first signal by using the AI model, and the first AI model used for performing the processing or measurement on the first signal.

In the embodiment, the TCI state may be associated with the AI model or may not be associated with the AI model. In a case where the TCI state is not configured with an associated AI model, the TCI state indicates that the terminal device performs the processing or measurement on the first signal without using the AI model. In a case where the TCI state is configured with the associated AI model, the TCI state indicates that the terminal device performs the processing or measurement on the first signal by using the first AI model. Furthermore, the TCI state may indicate that the first AI model is the AI model associated with the TCI state.

That is to say, the network device implicitly indicates, to the terminal device by using the TCI state associated with the first signal, whether to perform the processing or measurement on the first signal by using the AI model, and the first AI model used for performing the processing or measurement on the first signal.

It is to be noted that whether the TCI state is associated with the AI model and the AI model associated with the TCI state may be configured by the network device. The network device may configure, through the RRC signaling, whether the TCI state is associated with the AI model, and the AI model associated with the TCI state. The network device may configure, through TCI state configuration information, whether the TCI state is associated with the AI model, and the AI model associated with the TCI state. Exemplarily, the network device may configure, through dedicated signaling or TCI state configuration information, the correspondence between a TCI state ID and the model ID, or a correspondence between the TCI state ID and a function of the model.

In some embodiments, if the TCI state is associated with the AI model, the network device may also dynamically update the first AI model associated with the TCI state by the MAC layer signaling or the DCI signaling, thereby flexibly reusing the same TCI state to implement different AI model configurations, to avoid frequent reconfiguration of the signaling.

In some embodiments, one group of TCI states may correspond to one AI model, and different groups of TCI states correspond to different models. Exemplarily, the network device may configure two groups of TCI states, each group of TCI states may include multiple TCI states corresponding to one TRP or one cell, thereby corresponding to different AI models in this case. For example, the two groups of TCI states correspond to the AI model 1 and the AI model 2, respectively. When the first signal is from the TRP 1, the first signal may be configured with a TCI state in the first group of TCI states, so as to correspond to the AI model 1. When the first signal is from the TRP 2, the first signal may be configured with a TCI state in the second group of TCI states, so as to correspond to the AI model 2. Therefore, an association between the first signal and the AI model may be established through the TCI state group.

It is further to be noted that the TCI state may be replaced with other configurations used for acquiring a spatial-domain filter (transmit beam) or acquiring a spatial receive parameter (receive beam), such as, spatial receive information, transmit beam information, receive beam information, which is not limited in the embodiments of the present disclosure.

In the manner#6, the configuration information related to the first signal is the CORESET group index information associated with the first signal. The CORESET group index information associated with the first signal is CORESET group index information of a CORESET where a first Physical Downlink Control Channel (PDCCH) is located, and the first PDCCH is a PDCCH used for scheduling the first signal. That is to say, the CORESET group index information associated with the first signal is CORESET group index information of a CORESET where the PDCCH used for scheduling the first signal is located.

Exemplarily, if the first signal is the PDSCH/PUSCH/PUCCH, the CORESET group index information associated with the first signal is a CORESET group index of a CORESET where the PDCCH used for scheduling the PDSCH/PUSCH/PUCCH is located.

Exemplarily, if the first signal is an aperiodic CSI-RS or SRS, the CORESET group index information associated with the first signal is a CORESET group index of a CORESET where the PDCCH used for triggering the transmission of the aperiodic CSI-RS or SRS is located.

It is to be noted that a value range of the CORESET group index information is associated with the number of TRPs participating in the signal transmission of the terminal device. Exemplarily, if both current TRPs participate in the cooperative transmission with the terminal device, the value range of the CORESET group index is 0 and 1.

It is further to be noted that if the first signal is not scheduled by the PDDCH, the value of the CORESET group index information may be assumed to be 0.

In some embodiments, the network device indicates, through the CORESET group index information associated with the first signal, whether to perform the processing or measurement on the first signal by using the AI model, and/or the first AI model used for performing the processing or measurement on the first signal. Correspondingly, the terminal device determines, based on the CORESET group index information associated with the first signal, whether to perform processing or measurement on the first signal by using the AI model, and/or the first AI model used for performing the processing or measurement on the first signal.

In an implementation, the network device indicates, through the CORESET group index information associated with the first signal, the first AI model used for performing the processing or measurement on the first signal. Correspondingly, the terminal device determines, based on the CORESET group index information associated with the first signal, the first AI model used for performing the processing or measurement on the first signal.

In another implementation, the network device indicates, through the CORESET group index information associated with the first signal, whether to perform the processing or measurement on the first signal by using the AI model, and the first AI model used for performing the processing or measurement on the first signal. Correspondingly, the terminal device determines, based on the CORESET group index information associated with the first signal, whether to perform processing or measurement on the first signal by using the AI model, and the first AI model used for performing the processing or measurement on the first signal.

In the embodiment, the CORESET group index information may be associated with the AI model or may not be associated with the AI model. In a case where the CORESET group index information is not configured with an associated AI model, the CORESET group index information indicates that the terminal device performs the processing or measurement on the first signal without using the first AI model. In a case where the CORESET group index information is configured with the associated AI model, the CORESET group index information indicates performing the processing or measurement on the first signal by using the first AI model. The first AI model is the AI model associated with the CORESET group index information.

That is to say, the network device implicitly indicates, to the terminal device by using the CORESET group index information associated with the first signal, whether to perform the processing or measurement on the first signal by using the AI model, and/or the first AI model used for performing the processing or measurement on the first signal.

It is to be noted that whether the CORESET group index information is associated with the AI model and the AI model associated with the CORESET group index information may be configured by the network device.

In some embodiments, the association relationship between the CORESET group index information and the AI model may be pre-configured to the terminal device in advance through high layer dedicated signaling. The network device may configure, through high layer dedicated signaling, the correspondence between the CORESET group index information and the model ID, or a correspondence between the CORESET group index and a function of the model. Exemplarily, the CORESET group index=0, it corresponds to the primary cell and also corresponds to the AI model 1 used by the primary cell. The CORESET group index=1, it corresponds to the cooperative cell and also corresponds to the AI model 2 used by the cooperative cell.

In some embodiments, if the CORESET group index information is associated with the AI model, the network device may also dynamically update the first AI model associated with the CORESET group index information by the MAC layer signaling or the DCI signaling, thereby flexibly reusing the same CORESET group index information to implement different AI model configurations, to avoid frequent reconfiguration of the signaling.

In the manner#7, the configuration information related to the first signal is the PCI information associated with the first signal. The PCI information associated with the first signal is PCI information used for generating a sequence of the first signal, or the PCI information associated with the first signal is PCI information configured in a TCI state of the first signal.

Exemplarily, if the first signal is a reference signal (for example, a downlink reference signal, such as a synchronization signal, CSI-RS or DMRS; or an uplink reference signal, such as an SRS or a DMRS), the PCI is the PCI used for generating the sequence of the first signal.

Exemplarily, if the first signal is a reference signal, a control signal (such as a PUCCH or a PDCCH), or a data signal (such as a PDCCH or a PDSCH), the PCI is configured in the TCI state of the first signal. When configuring the TCI state, the network device may configure a PCI associated with each TCI state. When the TCI state is indicated to the first signal, the terminal device may determine the corresponding first AI model according to the PCI configured in the TCI state. If the PCI is not configured in the TCI state, it may be assumed that the PCI is the PCI of the current serving cell.

It is to be noted that if the network device does not configure the PCI information for the terminal device, the terminal device may assume that the PCI information is the PCI of the current serving cell.

In some embodiments, the network device indicates, through the PCI information associated with the first signal, whether to perform the processing or measurement on the first signal by using the AI model, and/or the first AI model used for performing the processing or measurement on the first signal. Correspondingly, the terminal device determines, based on the PCI information associated with the first signal, whether to perform processing or measurement on the first signal by using the AI model, and/or the first AI model used for performing the processing or measurement on the first signal.

In an implementation, the network device indicates, through the PCI information associated with the first signal, the first AI model used for performing the processing or measurement on the first signal. Correspondingly, the terminal device may determine, based on the PCI information associated with the first signal, the first AI model used for the processing or measurement of the first signal.

In another implementation, the network device indicates, through the PCI information associated with the first signal, whether to perform the processing or measurement on the first signal by using the AI model, and the first AI model used for performing the processing or measurement on the first signal. Correspondingly, the terminal device determines, based on the PCI information associated with the first signal, whether to perform processing or measurement on the first signal by using the AI model, and the first AI model used for performing the processing or measurement on the first signal.

In the embodiment, the PCI information may be associated with the AI model or may not be associated with the AI model. In a case where the PCI information is not configured with an associated AI model, the PCI information indicates that the terminal device performs the processing or measurement on the first signal without using the AI model. In a case where the PCI information is configured with the associated AI model, the PCI information indicates performing the processing or measurement on the first signal by using the first AI model. Furthermore, the PCI information may indicate that the first AI model is the AI model associated with the PCI information.

That is to say, the network device implicitly indicates, to the terminal device by using the PCI information associated with the first signal, whether to perform the processing or measurement on the first signal by using the AI model, and/or the first AI model used for performing the processing or measurement on the first signal.

It is to be noted that whether the PCI information is associated with the AI model and the AI model associated with the PCI information may be configured by the network device.

Exemplarily, the network device may configure, through dedicated signaling or RRC signaling, whether the PCI information is associated with the AI model, and the AI model associated with the PCI information.

Exemplarily, the network device may configure the PCI and the AI model associated with the PCI together in the same information field.

Exemplarily, when the network device configures the neighbouring cell information, the neighbouring cell information includes both PCI information of the neighbouring cell and information of the AI model (such as the model ID or the function) used by the neighbouring cell, thereby establishing a correspondence between the PCI and the AI model.

It is to be noted that if the PCI information is associated with the AI model, the network device may also dynamically update the first AI model associated with the PCI information by the MAC layer signaling or the DCI signaling, thereby flexibly reusing the same PCI information to implement different AI model configurations, to avoid frequent reconfiguration of the signaling.

In the embodiment of the present disclosure, after the network device instructs, through the configuration information related to the first signal, the terminal device to perform the processing or measurement on the first signal by using the first AI model, and the terminal device determines, based on the configuration information related to the first signal, to perform the processing or measurement on the first signal by using the first AI model, the method for signal processing provided by the embodiments of the present disclosure may further include one or more of the following four operations.

The network device receives the first signal that is processed by the terminal device by using the first AI model.

The network device receives a reported measurement result after the terminal device performs measurement that is based on the first signal by using the first AI model.

The network device performs the processing on the first signal by using the second AI model corresponding to the first AI model.

The network device performs, by using the second AI model corresponding to the first AI model, decoding on the measurement result reported by the terminal device.

The operation that the terminal device performs the processing on the first signal by using the first AI model may include: one or more of signal generation, precoding, modulation, channel encoding, demodulation, channel decoding and channel detection are performed on the first signal by using the first AI model. The terminal device may send the first signal obtained after performing the processing by using the first AI model to the network device.

In some embodiments, if the first AI model is one end of the dual-end model, the network device performs the processing on the first signal by using the second AI model corresponding to the first AI model.

The operation that the network device performs the processing on the first signal by using the second AI model corresponding to the first AI model may include: the network device performs one or more of the signal generation, the precoding, the modulation, the channel encoding, the demodulation, the channel decoding and the channel detection on the first signal by using the second AI model.

It is to be noted that the fact that the first AI model corresponds to the second AI model may mean that the implementation operations of the first AI model have one-to-one correspondence with the implementation operations of the second AI model. Exemplarily, when the first AI model is used for downlink CSI feedback, the second AI model is used for the decoding of the downlink CSI feedback information. Alternatively, when the first AI model is used for generating of the downlink beam information, the second AI model may be used for the decoding of the downlink beam feedback information. When the first AI model is used for channel encoding of uplink data, the second AI model may be used for channel decoding of the uplink data, etc.

In another embodiment, the first AI model and the second AI model are jointly trained. That is to say, the first AI model and the second AI model are two concatenated parts split from one inference process, and in the training process, the output of the first AI model is the input of the second AI model.

In some embodiments, if the first AI model is a single-end model, the network device receives only the first signal that is processed by the terminal device by using the first AI model.

It is to be understood that the operation that terminal device performs the measurement on the first signal by using the first AI model may include: the terminal device obtains downlink channel information based on the measurement of the first signal; and the terminal device uses the downlink channel information as an input of the AI model to obtain a target measurement result.

In some embodiments, if the first AI model is one end of the dual-end model, the network device may perform, by using the second AI model corresponding to the first AI model, the decoding on the measurement result reported by the terminal device.

In some embodiments, if the first AI model is the single-end model, the network device receives only the reported measurement result after the terminal device performs the measurement that is based on the first signal by using the first AI model.

In conclusion, the embodiments of the present disclosure provide a method for signal processing. The terminal device is able to determine, according to the configuration information related to the first signal, whether to perform the processing or measurement on the first signal by using the AI model, and/or the first AI model used for performing the processing or measurement on the first signal. Herein, the configuration information related to the first signal may be configuration information associated with the function of the TRP/cell/signal, such as, the reference signal configuration information, the CSI reporting configuration information, the TCI state, the CORESET group index information, or the PCI information. In this way, the network device may indicate, to the terminal device through the configuration information related to the first signal, whether to perform the processing or measurement on the first signal by using the AI model, based on whether the function of the TRP/cell/signal supports the AI model-based transmission, so as to enable the terminal device to select an optimal manner to perform the processing or measurement on the first signal. In addition, since the configuration information related to the first signal is associated with the function of the TRP/cell/signal, the network device is able to configure different AI models for different TRP/cell/signal functions through the configuration information related to the first signal. In this way, the AI model specific to the function of the TRP/cell/signal can be implemented, thereby improving the performance of the AI model-based transmission.

Hereinafter, the communication method provided by the embodiments of the present disclosure will be described in detail with reference to specific application scenarios.

### First embodiment

In this embodiment, signals having different functions may correspond to different AI models (i.e., Model associated with RS (set) with different functionalities). The embodiment may include the operation S1 to operation S6.

In operation S1, the network device determines the first AI model corresponding to the first signal.

In some embodiments, the first signal is a reference signal for downlink measurement, e.g., a CSI-RS.

In some embodiments, the network device determines the first AI model corresponding to the first signal according to the function of the first signal.

It is to be understood that when the first signal is used for different functions, the corresponding first AI models are different. It is to be noted that the function of the first signal includes, but is not limited to, the CSI measurement, the beam management, the positioning, the time-frequency synchronization, and the like. Herein, the function may be further subdivided. For example, the CSI measurement may be further subdivided into several of RSRP measurement, SINR measurement, measurement of channel information (e.g. RI/PMI/CQI) for scheduling, single TRP measurement, CJT measurement, NCJT measurement, sub-band measurement, and wide-band measurement. The beam management may be further subdivided into several of time-domain beam prediction, spatial-domain beam prediction, transmit beam selection, etc. The positioning may be further subdivided into location information reporting, channel information reporting for positioning, timing information reporting, and the like.

In some embodiments, the network device or the terminal device may determine the AI model required for implementing each function by pre-training. If the terminal device performs the pre-training, the terminal device may report the AI model corresponding to each function to the network device through the UE capability information.

In operation S2, the network device may indicate, to the terminal device, first AI model through the reference signal configuration information of the first signal.

In operation S3, the terminal device determines the first AI model corresponding to the first signal according to the reference signal configuration information of the first signal.

In an implementation, the reference signal configuration information of the first signal includes first indication information, and the first indication information is used for indicating the first AI model. It is to be understood that the terminal device may determine, according to the first indication information in the reference signal configuration information, the first AI model corresponding to the first signal.

It is to be noted that the first indication information may indicate the function of the first AI model. The function of the first AI model includes, but is not limited to, the CSI measurement, the beam management, the positioning, the time-frequency synchronization, and the like. The first indication information may be implemented in the form of the function ID, or the like.

It is to also be noted that the AI models (specifically, including model structures and model parameters) corresponding to different functions may be pre-agreed between the terminal device and the network device. Exemplarily, the terminal device may pre-train the AI model corresponding to the function of each signal, and the terminal device may report, to the network device, the AI model corresponding to the function of each signal through the UE capability information. Alternatively, the network device may pre-train the AI model corresponding to the function of each signal, and configure, to the terminal device, the AI model corresponding to the function of each signal.

Exemplarily, when the function of the first signal is the CSI measurement, the AI model 1 is adopted. When the function of the first signal is the positioning, the AI model 2 is adopted. Alternatively, when the function of the first signal is the single-TRP measurement, the AI model 1 is adopted. When the function of the first signal is the NCJT measurement, the AI model 2 is adopted. The AI model 1 and the AI model 2 have different model structures and model parameters, and have different inputs and different outputs. The input structures and output structures of the AI model 1 and the AI model 2 may be pre-agreed between the terminal device and the network device.

In another implementation, the reference signal configuration information of the first signal may include indication information of the first reference signal resource set. That is to say, the reference signal configuration information of the first signal may indicate the first reference signal resource set. The terminal device may use, according to the first reference signal resource set indicated by the reference signal configuration information, an AI model corresponding to the first reference signal resource set as the first AI model corresponding to the first signal. The first reference signal resource set has the correspondence with the AI model.

It is to be noted that the correspondence between the reference signal resource set and the AI model may be configured by the network device to the terminal device, and may be embodied by the correspondence between the reference signal resource set and the function of the AI model. When the terminal device determines the function of the first signal through the reference signal resource set, the terminal device is able to determine the first AI model corresponding to the function. The function may refer to the description in operation S1. For brevity, details are not elaborated herein again.

In an implementation, the network device may pre-configure the function corresponding to each reference signal resource set through the RRC signaling. Correspondingly, the terminal device determines, according to the function, the pre-agreed/pre-configured AI model for implementing the function. Exemplarily, when the function corresponding to the first CSI-RS resource set is the CSI measurement, the first AI model corresponding to the corresponding CSI-RS is an AI model 1. When the function corresponding to the second CSI-RS resource set is the time-frequency tracking, the first AI model corresponding to the corresponding CSI-RS is an AI model 2.

It is to be noted that the network device may configure the correspondence between the reference signal resource set and the AI model through the RRC signaling, and then dynamically update the AI model corresponding to the reference signal resource set through the MAC layer signaling or the DCI signaling, thereby flexibly reusing the same reference signal resource set to implement different functions, to avoid frequent reconfiguration of the RRC signaling.

In operation S4, the terminal device performs the measurement that is based on the first signal by using the first AI model.

The terminal device obtains downlink channel information based on the measurement of the first signal; and uses the downlink channel information as the input of the first AI model to obtain the target measurement result by inferring.

It is to be noted that the downlink channel information may be a physical quantity reflecting the channel state obtained based on the measurement of the first signal, such as, a channel covariance matrix R, a channel matrix H, a feature value of a channel, a feature vector of a channel, a channel impulse response, a delay power spectrum of a channel, a strength (such as RSRP) of a channel, an angle (e.g., the AOA) of a channel, and the like. The target measurement result may be some measurement values required for the network device to perform the scheduling/positioning/beam management, such as precoding indication information, RI, CQI, RSRP, SINR, beam index, positioning result, positioning error, timing information, TDCP, channel estimation value.

Exemplarily, when the first signal and the first AI model are used for the traditional CSI measurement, the terminal device may use a feature vector of a downlink channel obtained based on the measurement of the first signal as the input of the first AI model, thereby outputting and obtaining the corresponding precoding indication information (the PMI information). When the first signal and the first AI model are used for the beam management, the first signal may be a group of CSI-RSs, and the terminal device may use the corresponding RSRPs obtained based on the measurement of the CSI-RSs as the input of the first AI model, thereby outputting and obtaining the index of the predicted beam with the best performance and the RSRP corresponding to the beam with the best performance.

In operation S5, the terminal device reports the measurement result to the network device.

In operation S6, the network device receives the measurement result.

In some embodiments, if the first AI model is one end of the dual-end model, the network device may perform, by using the second AI model corresponding to the first AI model, the decoding on the measurement result reported by the terminal device.

In some embodiments, if the first AI model is a single-end model, the network device receives the measurement result and does not need to perform the decoding based on the AI model.

It is to be understood that, based on the method in the present embodiment, the network device indicates the function of the corresponding AI model in the reference signal configuration information; and the terminal device is able to determine the function implemented by the reference signal and the corresponding AI model according to the information, thereby implementing different measurement functions based on different AI models through different reference signals, and improving accuracy of the measurement.

### Second embodiment

In this embodiment, reference signals of different TRPs/cells may correspond to different AI models (Model associated with RS (set) with different cells/TRPs). The embodiment may include an operation S1 to an operation S6.

In operation S1, the network device determines the first AI model corresponding to the first signal.

In some embodiments, the first signal is a reference signal for downlink measurement, e.g., a CSI-RS.

In some embodiments, the network device determines the first AI model corresponding to the first signal according to a TRP/cell for the transmission of the first signal.

It is to be understood that when the TRPs/cells sending the first signal are different, the corresponding first AI models are different. The different TRPs may be configured with the same cell ID or different cell IDs. When different TRPs have different cell IDs, different TRPs are different cells.

It is to be noted that the network device or the terminal device may determine the AI model corresponding to each TRP by pre-training. If the terminal device performs the pre-training, the reporting is performed to the network device through the UE capability information. Since different TRPs have different geographical locations, scattering environments, and the like, and have different channel parameters with the terminal device, different AI models are required to be trained for the measurement to obtain the most accurate measurement result.

In operation S2, the network device may indicate, to the terminal device, first AI model through the reference signal configuration information of the first signal.

In operation S3, the terminal device determines the first AI model corresponding to the first signal according to the reference signal configuration information of the first signal.

In an implementation, the reference signal configuration information of the first signal includes first indication information, and the first indication information is used for indicating the first AI model. It is to be understood that the terminal device may determine, according to the first indication information in the reference signal configuration information, the first AI model corresponding to the first signal.

It is to be noted that the first indication information may indicate the model ID of the first AI model. The AI models (specifically including model structures and model parameters) corresponding to different model IDs may be pre-agreed between the terminal device and the network device. Exemplarily, the terminal device may pre-train the AI model, and report the AI model to the network device through the UE capability information. Alternatively, the network device may pre-train the AI model and configure the AI model to the terminal device.

It is further to be noted that different model IDs may correspond to different AI models, and different AI models may implement the same function. For example, different AI models have the same model structure (and have the same input format and output format), but have different model parameters; and the different AI models may be obtained by training according to the channel environments of different TRPs.

In another implementation, the reference signal configuration information of the first signal may include indication information of the first reference signal resource set. That is to say, the reference signal configuration information of the first signal may indicate the first reference signal resource set. The terminal device may use, according to the first reference signal resource set indicated by the reference signal configuration information, an AI model corresponding to the first reference signal resource set as the first AI model corresponding to the first signal. The first reference signal resource set has the correspondence with the AI model.

It is to be noted that the correspondence between the reference signal resource set and the AI model may be configured by the network device to the terminal device, and may be embodied by the correspondence between the reference signal resource set and the model ID of the AI model. When the terminal device determines the model ID of the first AI model through the reference signal resource set, the terminal device is able to determine the first AI model corresponding to the model ID.

Exemplarily, the network device may pre-configure the model ID corresponding to each CSI-RS resource set; and the terminal device determines, according to the ID, a pre-agreed/pre-configured corresponding AI model. For example, when the model ID corresponding to the first CSI-RS resource set is ID 1, the first AI model corresponding to the corresponding CSI-RS is an AI model 1. When the model ID corresponding to the second CSI-RS resource set is ID 2, the first AI model corresponding to the corresponding CSI-RS is an AI model 2.

In some embodiments, the network device may configure the correspondence between the reference signal resource set and the AI model through the RRC signaling, and then dynamically update the AI model corresponding to the reference signal resource set through the MAC layer signaling or the DCI signaling, thereby flexibly reusing the same reference signal resource set for the measurements of different TRPs or cells, to avoid frequent reconfiguration of the RRC signaling.

In operation S4, the terminal device performs the measurement that is based on the first signal by using the first AI model.

The terminal device obtains downlink channel information based on the measurement of the first signal; and uses the downlink channel information as the input of the first AI model to obtain the target measurement result by inferring.

It is to be noted that the description related to the downlink channel information and the target measurement result may refer to first embodiment. For brevity, details are not elaborated herein again.

It is further to be noted that in the second embodiment, since the functions implemented by different first AI models are the same, the format of the inputted downlink channel information (for example, all of which are the feature vectors having the same size) may be the same, and the formats of the outputted measurement results (for example, all of which are the precoding indication information) may also be the same. However, due to different model parameters, different results (corresponding to channel environments of different TRPs) will be obtained by inferring.

In operation S5, the terminal device reports the measurement result to the network device.

In operation S6, the network device receives the measurement result.

It is to be understood that, based on the method in the present embodiment, the network device indicates the model ID of the corresponding AI model in the reference signal configuration information, and the reference signals transmitted by different TRPs correspond to different model IDs. The terminal device is able to determine the corresponding AI model according to the information, thereby implementing the TRP-specific AI model, and improving the accuracy of the measurement.

### Third embodiment

In this embodiment, the AI model corresponding to the TRP/cell/function of the reference signal is unknown for the terminal device (Model associated with functionality unknown to the UE). The embodiment may include an operation S1 to operation S6.

In operation S1, the network device determines the first AI model corresponding to the first signal.

In some embodiments, the first signal is a reference signal for downlink measurement, e.g., a CSI-RS.

In some embodiments, the network device determines the first AI model corresponding to the first signal according to the TRP for the transmission of the first signal or the function of the first signal.

It is to be understood that when the TRPs for the transmission of the first signal are different, the corresponding first AI models are different. Alternatively, when the first signal has different functions, the corresponding first AI models are different. It is to be noted that different TRPs may also be different cells.

Exemplarily, when the transmission of the first signal is performed by the TRP 1 and is used for channel measurement of the TRP 1, it corresponds to the AI model 1. When the transmission of the first signal is performed by the TRP 2 and is used for channel measurement of the TRP 2, it corresponds to the AI model 2. When the first signal is used for the CJT transmission (including multiple signals) of the TRP 1 and the TRP 2, it corresponds to the AI model 3. When the first signal is used for the NCJT transmission of the TRP 1 and the TRP 2, it corresponds to the AI model 3. When the first signal is used for downlink positioning, it corresponds to the AI model 4. When the first signal is used for beam management, it corresponds to the AI Model 5, and so on.

In the embodiment, both the TRP for the transmission of the first signal and the function of the first signal are unknown to the terminal device. The network device does not need to indicate the TRP for the transmission of the first signal or the function of the first signal.

In operation S2, the network device may indicate, to the terminal device, first AI model through the reference signal configuration information of the first signal.

In operation S3, the terminal device determines the first AI model corresponding to the first signal according to the reference signal configuration information of the first signal.

In an implementation, the reference signal configuration information of the first signal includes first indication information, and the first indication information is used for indicating the first AI model. It is to be understood that the terminal device may determine, according to the first indication information in the reference signal configuration information, the first AI model corresponding to the first signal.

It is to be noted that the first indication information may indicate the model ID of the first AI model. The AI models (specifically including model structures and/or model parameters) corresponding to different model IDs may be pre-agreed between the terminal device and the network device, or is configured by the network device to the terminal device.

It is further to be noted that different model IDs correspond to different AI models, and different AI models may have the same or different model structures (and have the same or different input formats and output formats). In addition, different AI models may have different model parameters. In addition, different models may correspond to different functions or TRPs, but at the terminal device side, only the first AI model is required to be determined and the function of the model or which TRP corresponding to the model is not required to be known.

In another implementation, the reference signal configuration information of the first signal may include indication information of the first reference signal resource set. That is to say, the reference signal configuration information of the first signal may indicate the first reference signal resource set. The terminal device may use, according to the first reference signal resource set indicated by the reference signal configuration information, an AI model corresponding to the first reference signal resource set as the first AI model corresponding to the first signal. The first reference signal resource set has the correspondence with the AI model.

In operation S4, the terminal device performs the measurement that is based on the first signal by using the first AI model.

The terminal device obtains downlink channel information based on the measurement of the first signal; and uses the downlink channel information as the input of the first AI model to obtain the target measurement result by inferring.

It is to be noted that the description related to the downlink channel information and the target measurement result may refer to first embodiment. For brevity, details are not elaborated herein again.

It is further to be noted, for different first AI models, the formats of the inputted downlink channel information may be the same or different; and the formats of the outputted measurement results may also be the same or different, which are determined by the AI model per se.

Exemplarily, when the transmission of the first signal is performed by the TRP 1 and is used for channel measurement of the TRP 1, the first AI model indicated by the network device is the AI model 1. When the transmission of the first signal is performed by the TRP 2 and is used for channel measurement of the TRP 2, the first AI model indicated by the network device is the AI model 2. When the first signal is used for the CJT transmission (including multiple signals) of the TRP 1 and the TRP 2, the first AI model indicated by the network device is the AI model 3. The AI model 1 and the AI model 2 have the same model structure and different model parameters, and have the same input format and output format. The AI Model 3 is different from the AI Model 1 or the AI Model 2 in both the model structures and the model parameters, and in the input formats and output formats.

In operation S5, the terminal device reports the measurement result to the network device.

In operation S6, the network device receives the measurement result.

It is to be understood that the function of the reference signal in the prior art is predefined, and reference signals with different functions are defined separately and have different time-frequency resources and transmission modes. According to the method of the present disclosure, the function of the reference signal may be transparent to the terminal device, and the terminal device needs to only perform the measurement on the first signal according to the corresponding AI model, and does not need to know the cell/TRP/function of the first signal, thereby increasing the flexibility of the reference signal. For example, the network device is able to configure the same reference signal and different AI models for different terminal devices, so as to flexibly implement measurements required for different functions on different terminal devices by using the same reference signal.

### Fourth embodiment

In this embodiment, uplink reference signals of different functions/TRPs/cells may correspond to different AI models (Model associated with UL RS with different functionalities/cells/TRPs). The embodiment may include an operation S1 to operation S6.

In operation S1, the network device determines the first AI model corresponding to the first signal.

In some embodiments, the first signal is an uplink reference signal, e.g., an SRS.

In some embodiments, the network device determines the first AI model corresponding to the first signal according to the TRP for the transmission of the first signal or the function of the first signal.

It is to be understood that when the TRPs sending the first signal are different, the corresponding first AI models are different. Alternatively, when the first signal has different functions, the corresponding first AI models are different. Herein, different TRPs may also be different cells.

Exemplarily, when the first signal is sent to the TRP 1 and is used for uplink channel measurement between the terminal device and the TRP 1, it corresponds to the AI model 1. When the first signal is sent to the TRP 2 and used for uplink channel measurement between the terminal device and the TRP 2, it corresponds to the AI model 2. When the first signal is used for downlink channel reciprocity transmission, it corresponds to the AI model 3, and so on.

In operation S2, the network device may indicate, to the terminal device, first AI model through the reference signal configuration information of the first signal.

In operation S3, the terminal device determines the first AI model corresponding to the first signal according to the reference signal configuration information of the first signal.

In an implementation, the reference signal configuration information of the first signal includes first indication information, and the first indication information is used for indicating the first AI model. It is to be understood that the terminal device may determine, according to the first indication information in the reference signal configuration information, the first AI model corresponding to the first signal.

In another implementation, the reference signal configuration information of the first signal may include indication information of the first reference signal resource set. That is to say, the reference signal configuration information of the first signal may indicate the first reference signal resource set. The terminal device may use, according to the first reference signal resource set indicated by the reference signal configuration information, an AI model corresponding to the first reference signal resource set as the first AI model corresponding to the first signal. The first reference signal resource set has the correspondence with the AI model.

In operation S4, the terminal device performs the processing on the first signal by using the first AI model.

It is to be noted that, for the uplink reference signal, the operation that the terminal device performs the processing on the first signal by using the first AI model may include precoding, modulation, signal generation processing, and the like that are based on the first signal.

Exemplarily, the terminal device uses the sequence of the first signal as an input of the first AI model and outputs the modulated first signal or outputs the precoded first signal.

In operation S5, the terminal device sends the processed first signal.

In operation S6, the network device receives the first signal.

In some embodiments, if the first AI model is one end of the dual-end model, the network device performs the reception on the first signal by using the second AI model corresponding to the first AI model.

In some embodiments, if the first AI model is a single-end model, the network device directly receives the first signal and does not need to perform the reception based on the AI model.

### Fifth embodiment

In this embodiment, CSI reporting configuration information of different functions/TRPs/cells may correspond to different AI models (Model associated with CSI report config with different functionalities/cells/TRPs). The embodiment may include following operation S1 to S5.

In operation S1, the network device determines the first AI model corresponding to the first signal.

In some embodiments, the first signal is a reference signal for downlink measurement, e.g., a CSI-RS.

In some embodiments, the network device determines the first AI model corresponding to the first signal according to the function of the first signal.

In some embodiments, the first signal may be used for downlink CSI measurement, downlink beam management, downlink positioning or downlink time-frequency synchronization, etc. The function of the first signal may be configured to the terminal device through the CSI reporting configuration information associated with the first signal. The CSI reporting configuration information is used for configuring measurement that is based on the first signal and reporting. The CSI reporting configuration information may further include CSI reporting quantity information, i.e., used for indicating a target measurement result (for example, RI/PMI/CQI, RSRP, location information, etc.) that is required to be reported.

It is to be noted that the function of the first signal may be indicated by the CSI reporting quantity information.

In operation S2, the network device may indicate, to the terminal device, first AI model through the CSI reporting configuration information associated with the first signal.

In operation S3, the terminal device determines the first AI model corresponding to the first signal according to the CSI reporting configuration information associated with the first signal.

The CSI reporting configuration information is used for configuring measurement that is based on the first signal and reporting. The CSI reporting configuration information may include first indication information that may indicate the first AI model. That is to say, the terminal device may determine, according to the first indication information carried in the CSI reporting configuration information, the first AI model corresponding to the first signal.

It is to be noted that the first indication information may indicate the model ID of the first AI model or the function of the model. The first indication information may indicate other information that can be used for determining the first AI model. The terminal device may determine the corresponding first AI model according to the model ID and/or the function of the model, the detail of which can refer to the description of other embodiments.

In operation S4, the terminal device performs the measurement that is based on the first signal by using the first AI model.

The terminal device obtains downlink channel information based on the measurement of the first signal; and uses the downlink channel information as the input of the first AI model to obtain the target measurement result by inferring.

It is to be noted that the target measurement result in this embodiment is obtained based on the target measurement result configuration indicated in the CSI reporting configuration information associated with the first signal, and the output of the first AI model is determined through the target measurement result configuration.

In operation S5, the terminal device reports the measurement result to the network device.

### Sixth embodiment

In this embodiment, TCI states of different TRPs/cells may correspond to different AI models (Model associated with TCI states with different cells/TRPs). The embodiment may include an operation S1 to operation S4.

In operation S1, the network device determines the first AI model corresponding to the first signal.

In some embodiments, the first signal may be a reference signal, e.g., a downlink reference signal such as a CSI-RS or a DMRS; or an uplink reference signal such as a SRS or a DMRS; the first signal may be a control signal, such as a PUCCH or a PDCCH; the first signal may also be a data signal, such as a PDCCH or a PDSCH, and the like, which is not limited in the embodiments of the present disclosure.

In some embodiments, the network device determines the first AI model corresponding to the first signal according to a TRP/cell for the transmission of the first signal. Specifically, the network device may determine the first AI model corresponding to the first signal according to the TRP/cell sending the first signal or the TRP/cell receiving the first signal.

It is to be understood that when the TRPs sending or receiving the first signal are different, the corresponding first AI models are different. Alternatively, when the cells sending or receiving the first signal are different, the corresponding first AI models are different.

It is to be noted that the network device or the terminal device may determine the AI model corresponding to each TRP by pre-training. If the terminal device performs the pre-training, the reporting is performed to the network device through the UE capability information.

In operation S2, the network device may indicate, to the terminal device, first AI model through the TCI state of the first signal.

In operation S3, the terminal device determines the first AI model corresponding to the first signal according to the TCI state of the first signal.

It is to be understood that different TCI states have correspondence with different AI models. The terminal device may use the AI model corresponding to the TCI state of the first signal as the first AI model corresponding to the first signal.

In an implementation, the AI model corresponding to one TCI state may be configured in the configuration information of the TCI state. For example, the TCI state configuration information includes indication information of the model ID, indication information of the function of the model, or other information capable of being used for determining the first AI model, so that the terminal device is able to determine the AI model corresponding to the TCI state according to the information.

In another implementation, the correspondence between the TCI state and the AI model may be pre-configured to the terminal device in advance by high layer signaling. For example, the network device may configure, through high layer signaling, the correspondence between the TCI state ID and the model ID, or the correspondence between the TCI state ID and the function of the model.

In an implementation, one group of TCI states may correspond to one AI model, and different groups of TCI states correspond to different models. For example, the network device may configure two groups of TCI states, each group of TCI states may include multiple TCI states corresponding to one TRP or one cell, thereby corresponding to different AI models in this case. For example, the two groups of TCI states correspond to the AI model 1 and the AI model 2, respectively. When the first signal is from the TRP 1, the first signal may be configured with a TCI state in the first group of TCI states, so as to correspond to the AI model 1. When the first signal is from the TRP 2, the first signal may be configured with a TCI state in the second group of TCI states, so as to correspond to the AI model 2. Therefore, an association between the first signal and the AI model can be established through the TCI state group.

In an implementation, the network device may configure the correspondence between the TCI state group and the AI model through the RRC signaling, and then dynamically update the AI model corresponding to the TCI state group through the MAC layer signaling or the DCI signaling, thereby flexibly reusing the same TCI state group to implement signal transmission of different cells or different TRPs, to avoid frequent reconfiguration of the RRC signaling.

In operation S4, the terminal device performs the measurement that is based on the first signal by using the first AI model, or performs processing on the first signal by using the first AI model.

In an implementation, if the first signal is a downlink reference signal, the terminal device may perform the measurement that is based on the first signal by using the first AI model. The terminal device may obtain downlink channel information based on the measurement of the first signal; and uses the downlink channel information as the input of the first AI model to obtain the target measurement result by inferring.

In another implementation, if the first signal is an uplink reference signal, an uplink control signal, or an uplink data signal, the terminal device performs sending processing on the first signal by using the first AI model.

The operation of performing the sending processing on the first signal by using the first AI model may include: processing, such as the precoding, the modulation, the signal generation, the channel encoding is performed on the first signal by using the first AI model.

Exemplarily, the terminal device uses the sequence of the uplink reference signal as an input of the first AI model and outputs the modulated uplink reference signal.

Exemplarily, the terminal device uses the uplink control signal as an input of the first AI model and outputs the precoded uplink control signal.

Exemplarily, the terminal device uses uplink data and channel information as inputs of the first AI model and outputs precoded and modulated uplink data.

In another implementation, if the first signal is a downlink control signal or a downlink data signal, the terminal device performs reception processing on the first signal by using the first AI model.

The operation of performing the reception processing on the first signal by using the first AI model may include: processing, such as the demodulation, channel decoding, detection is performed on the first signal by using the first AI model.

Exemplarily, the terminal device uses the received channel-encoded downlink control signal as an input of the first AI model and outputs the channel-decoded downlink control signal.

Exemplarily, the terminal device uses the received downlink data signal as the input of the first AI model and outputs detected downlink data.

It is to be noted that the TCI state in the embodiment may be replaced with other configurations used for acquiring a spatial-domain filter (transmit beam) or acquiring a spatial receive parameter (receive beam), such as, spatial receive information, transmit beam information, receive beam information.

Since the TCI state may be configured to any uplink signal or downlink signal, based on the method provided in the present embodiment, a corresponding AI model may be determined for any uplink signal or downlink signal, to be used for the measurement or processing of the signal.

### Seventh embodiment

In this embodiment, CORESET group index information of different TRPs/cells may correspond to different AI models (Model associated with CORESETPoolindex with different cells/TRPs). The embodiment may include an operation S1 to operation S4.

In operation S1, the network device determines the first AI model corresponding to the first signal.

In some embodiments, the first signal may be a reference signal, e.g., a downlink reference signal such as a CSI-RS or a DMRS; or an uplink reference signal such as a SRS or a DMRS; the first signal may be a control signal, such as a PUCCH or a PDCCH; the first signal may also be a data signal, such as a PDCCH or a PDSCH, and the like, which is not limited in the embodiments of the present disclosure.

In some embodiments, the network device determines the first AI model corresponding to the first signal according to a TRP/cell for the transmission of the first signal. Specifically, the network device may determine the first AI model corresponding to the first signal according to the TRP/cell sending the first signal or the TRP/cell receiving the first signal.

In operation S2, the network device may indicate, to the terminal device, first AI model through the CORESET group index information associated with the first signal.

In operation S3, the terminal device determines the first AI model corresponding to the first signal according to the CORESET group index information associated with the first signal.

It is to be understood that the CORESET group index information has correspondence with the AI model. The terminal device may use, according to the CORESET group index information, the AI model corresponding to the CORESET group index information as the first AI model corresponding to the first signal.

In an implementation, the correspondence between the CORESET group index information and the AI model may be pre-configured to the terminal device in advance through high layer signaling. Exemplarily, the network device may configure, through high layer signaling, the correspondence between the CORESET group index information and the model ID, or a correspondence between the CORESET group index information and a function of the model. For example, the CORESET group index=0, it corresponds to the primary cell and also corresponds to the AI model 1 used by the primary cell. The CORESET group index=1, it corresponds to the cooperative cell and also corresponds to the AI model 2 used by the cooperative cell.

In an implementation, the network device may configure the correspondence between the CORESET group index information and the AI model through the RRC signaling, and then dynamically update the AI model corresponding to the CORESET group index information through the MAC layer signaling or the DCI signaling, thereby flexibly reusing the same CORESET group index information to implement signal transmission of different cells or different TRPs, to avoid frequent reconfiguration of the RRC signaling.

It is to be noted that the CORESET group index information associated with the first signal is CORESET group index information of a CORESET where the PDCCH used for scheduling the first signal is located.

Exemplarily, if the first signal is the PDSCH/PUSCH/PUCCH, the associated CORESET group index is a CORESET group index of a CORESET where the PDCCH used for scheduling the PDSCH/PUSCH/PUCCH is located.

Exemplarily, if the first signal is an aperiodic CSI-RS or SRS, the associated CORESET group index is a CORESET group index of a CORESET where the PDCCH used for triggering the transmission of the aperiodic CSI-RS or SRS is located.

A value range of the CORESET group index is associated with the number of TRPs participating in the signal transmission of the terminal device. Exemplarily, if current two TRPs participate in the cooperative transmission with the terminal device, the value range of the CORESET group index is 0 and 1.

It is further to be noted that if the first signal is not scheduled by the PDDCH, the value of the CORESET group index may be assumed to be 0.

In operation S4, the terminal device performs the measurement that is based on the first signal by using the first AI model, or performs processing on the first signal by using the first AI model.

It is to be understood, in the prior art, different CORESET group indexes are associated with different TRPs or cells. Based on the method provided in this embodiment, the network device may configure different AI models for the uplink signals or downlink signals transmitted by different TRPs or cells, thereby implementing the TRP-specific AI model or cell-specific AI model for the measurement or processing of the signal.

### Eighth embodiment

In this embodiment, PCI information of different TRPs/cells may correspond to different AI models (Model associated with PCIs with different cells/TRPs). The embodiment may include an operation S1 to operation S4.

In operation S1, the network device determines the first AI model corresponding to the first signal.

In some embodiments, the first signal may be a reference signal, e.g., a downlink reference signal such as a CSI-RS or a DMRS; or an uplink reference signal such as a SRS or a DMRS; the first signal may be a control signal, such as a PUCCH or a PDCCH; the first signal may also be a data signal, such as a PDCCH or a PDSCH, and the like, which is not limited in the embodiments of the present disclosure.

In some embodiments, the network device determines the first AI model corresponding to the first signal according to a TRP/cell for the transmission of the first signal. Specifically, the network device may determine the first AI model corresponding to the first signal according to the TRP/cell sending the first signal or the TRP/cell receiving the first signal.

In operation S2, the network device may indicate, to the terminal device, first AI model through the PCI information associated with the first signal.

It is to be noted that different pieces of PCI information represent different cell and correspond to different AI models.

In operation S3, the terminal device determines the first AI model corresponding to the first signal according to the PCI associated with the first signal.

It is to be understood that PCI information has correspondence with the AI model. The terminal device may use, according to the PCI associated with the first signal, the AI model corresponding to the PCI information as the first AI model corresponding to the first signal.

In an implementation, the correspondence between the PCI and the AI model may be pre-configured to the terminal device in advance by high layer signaling. Exemplarily, when the network device configures the neighbouring cell information, the neighbouring cell information includes both the PCI of the neighbouring cell and information of the AI model (such as the model ID or the function) used by the neighbouring cell, thereby establishing the correspondence between the PCI and the AI model.

It is to be noted that the PCI associated with the first signal is the PCI used for generating a sequence of the first signal, or the PCI configured in a TCI state of the first signal.

In an implementation, if the first signal is a reference signal (for example, a downlink reference signal, such as a synchronization signal, CSI-RS or DMRS; or an uplink reference signal, such as an SRS or a DMRS), the PCI is the PCI used for generating the sequence of the first signal.

In another implementation, if the first signal is a reference signal, a control signal (such as a PUCCH or a PDCCH), or a data signal (such as a PDCCH or a PDSCH), the PCI is configured in the TCI state of the first signal. Specifically, when configuring the TCI state, the network device may configure a PCI associated with each TCI state. When the TCI state is indicated to the first signal, the terminal device may determine the corresponding first AI model according to the PCI configured in the TCI state. If the PCI is not configured in the TCI state, it may be assumed that the PCI is the PCI of the current serving cell.

It is to be noted that if the network device does not configure PCI for the terminal device, the terminal device may assume that the PCI is the PCI of the current serving cell.

In operation S4, the terminal device performs the measurement that is based on the first signal by using the first AI model, or performs processing on the first signal by using the first AI model.

It is to be understood, in the prior art, different cell IDs are associated with different cells. Based on the method provided in this embodiments, different AI models may be determined for the uplink signals or downlink signals scheduled by different cells, thereby implementing the cell-specific AI model for the measurement or processing of the signal.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions obtained after the combination shall also fall within the scope of protection of the present disclosure.

It is further to be understood that in various method embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

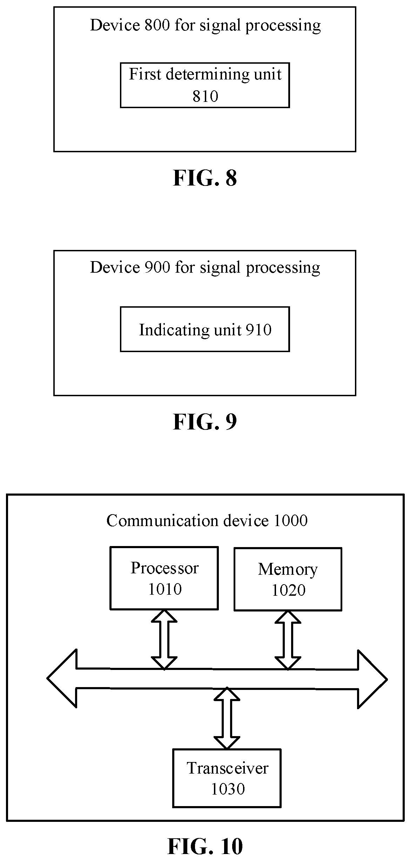

FIG. 8 is a schematic diagram of a structural composition of a device 800 for signal processing according to an embodiment of the present disclosure, and the device 800 for signal processing is applied to a terminal device. As illustrated in FIG. 8, the device 800 for signal processing includes a first determining unit 810.

The first determining unit 810 is configured to determine, based on configuration information related to a first signal, whether to perform processing or measurement on the first signal by using an AI model, and/or a first AI model used for performing the processing or measurement on the first signal, where the configuration information includes any one of:
reference signal configuration information for configuring the first signal;
CSI reporting configuration information associated with the first signal;
a TCI state associated with the first signal;
CORESET group index information associated with the first signal; and
PCI information associated with the first signal.

In some embodiments, the configuration information is the reference signal configuration information for configuring the first signal, the reference signal configuration information includes first indication information. The first indication information is used for indicating whether to perform the processing or measurement on the first signal by using the AI model, and/or the first AI model.

In some embodiments, the configuration information is the reference signal configuration information for configuring the first signal.

The reference signal configuration information indicates a first reference signal resource set, and one or more reference signal resources included in the first reference signal resource set are used for performing transmission of the first signal,

The first determining unit 810 is further configured to: in a case where the first reference signal resource set does not have an associated AI model, determine to perform the processing or measurement on the first signal without using the AI model; in a case where the first reference signal resource set has the associated AI model, determine to perform the processing or measurement on the first signal by using the first AI model; where the first AI model is the AI model associated with the first reference signal resource set.

In some embodiments, the configuration information is the reference signal configuration information for configuring the first signal.

The reference signal configuration information indicates a first reference signal resource set, and one or more reference signal resources included in the first reference signal resource set are used for performing transmission of the first signal. The first AI model is the AI model associated with the first reference signal resource set.

In some embodiments, the AI model associated with the first reference signal resource set is predefined, or configured by the network device.

In some embodiments, the configuration information is the CSI reporting configuration information associated with the first signal, the CSI reporting configuration information includes first indication information. The first indication information is used for indicating whether to perform the processing or measurement on the first signal by using the AI model, and/or the first AI model.

In some embodiments, the configuration information is the CSI reporting configuration information associated with the first signal, and the CSI reporting configuration information is used for configuring CSI measurement that is based on the first signal and CSI reporting.

The CSI reporting configuration information includes indication information of a second reference signal resource set, and one or more reference signal resources in the second reference signal resource set are used for performing transmission of the first signal.

The first determining unit 810 is further configured to: in a case where the CSI reporting configuration information does not have an associated AI model, determine to perform the processing or measurement on the first signal without using the AI model; and in a case where the CSI reporting configuration information has the associated AI model, determine to perform the processing or measurement on the first signal by using the first AI model, where the first AI model is the AI model associated with the CSI reporting configuration information.

In some embodiments, the configuration information is the CSI reporting configuration information associated with the first signal, and the CSI reporting configuration information is used for configuring CSI measurement that is based on the first signal and CSI reporting.

The CSI reporting configuration information includes indication information of a second reference signal resource set, and one or more reference signal resources in the second reference signal resource set are used for performing transmission of the first signal. The CSI reporting configuration information has the associated AI model, and the first AI model is the AI model associated with the CSI reporting configuration information.

In some embodiments, the AI model associated with the CSI reporting configuration information is predefined, or configured by a network device.

In some embodiments, the configuration information is the TCI state associated with the first signal, and the TCI state associated with the first signal is a TCI state configured by a network device for the first signal.

The first determining unit 810 is further configured to: in a case where the TCI state is not configured with an associated AI model, determine to perform the processing or measurement on the first signal without using the AI model; and in a case where the TCI state is configured with the associated AI model, determine to perform the processing or measurement on the first signal by using the first AI model. The first AI model is the AI model associated with the TCI state.

In some embodiments, the configuration information is the TCI state associated with the first signal, and the TCI state associated with the first signal is a TCI state configured by a network device for the first signal. The TCI state is configured with the associated AI model, and the first AI model is the AI model associated with the TCI state.

In some embodiments, the configuration information is the CORESET group index information associated with the first signal.

The first determining unit 810 is further configured to: in a case where the CORESET group index information is not configured with an associated AI model, determine to perform the processing or measurement on the first signal without using the AI model; and in a case where the CORESET group index information is configured with the associated AI model, determine to perform the processing or measurement on the first signal by using the first AI model. The first AI model is the AI model associated with the CORESET group index information.

In some embodiments, the configuration information is the CORESET group index information associated with the first signal, and the CORESET group index information is configured with an associated AI model. The first AI model is the AI model associated with the CORESET group index information.

In some embodiments, the CORESET group index information associated with the first signal is CORESET group index information of a CORESET where a first PDCCH is located, and the first PDCCH is a PDCCH used for scheduling the first signal.

In some embodiments, the configuration information is the PCI information associated with the first signal.

The first determining unit 810 is further configured to: in a case where the PCI information is not configured with an associated AI model, determine to perform the processing or measurement on the first signal without using the AI model; and in a case where the PCI information is configured with the associated AI model, determine to perform the processing or measurement on the first signal by using the first AI model. The first AI model is the AI model associated with the PCI information.

In some embodiments, the configuration information is the PCI information associated with the first signal, and the PCI information is configured with an associated AI model. The first AI model is the AI model associated with the PCI information.

In some embodiments, the PCI information associated with the first signal is PCI information used for generating a sequence of the first signal, or the PCI information associated with the first signal is PCI information configured in a TCI state of the first signal.

In some embodiments, when the first indication information is used for indicating whether to perform the processing or measurement on the first signal by using the AI model, the first indication information includes 1-bit information. When the first indication information indicates a first value, it indicates performing the processing or measurement on the first signal by using the AI model; and when a value of the first indication information is a second value, it indicates performing the processing or measurement on the first signal without using an AI model. Alternatively, when the first indication information is default, it indicates performing the processing or measurement on the first signal without using the AI model, and when the first information is present, it indicates performing the processing or measurement on the first signal by using the AI model.

In some embodiments, when the first indication information is used for indicating the first AI model, the first indication information indicates a function of the first AI model and/or identification information of the first AI model.

In some embodiments, when the first indication information is used for indicating whether to perform the processing or measurement on the first signal by using the AI model and the first AI model used for performing the processing or measurement on the first signal, the first indication information includes multiple indication states, where a first indication state among the multiple indication states indicates performing the processing or measurement on the first signal without using the AI model, and another indication states among the multiple indication states is used for indicating the first AI model used for performing the processing or measurement on the first signal; and/or the first indication information indicates functions of the AI model, where a first function is used for indicating performing the processing or measurement on the first signal without using the AI model, and another function is used for indicating the first AI model used for performing the processing or measurement on the first signal; and/or the first indication information indicates identification information of the AI model, where the first identification information is used for indicating performing the processing or measurement on the first signal without using the AI model, and another piece of identification information is used for indicating the first AI model used for performing the processing or measurement on the first signal.

In some embodiments, the device 800 for signal processing further includes a measuring unit configured to: obtain downlink channel information based on the measurement of the first signal; and use the downlink channel information as the input of the AI model to obtain the target measurement result.

In some embodiments, the device 800 for signal processing further includes a first processing unit configured to perform one or more of signal generation, precoding, modulation, channel encoding, demodulation, channel decoding and channel detection on the first signal by using the AI model.

In some embodiments, an input structure and/or an output structure of the first AI model is predefined by the terminal device and a network device, or pre-configured by the network device for the terminal device.

Those skilled in the art will appreciate that the related descriptions of the aforementioned device for signal processing in the embodiments of the present disclosure may be understood with reference to the descriptions of the aforementioned method for signal processing in the embodiments of the present disclosure.

FIG. 9 is a schematic diagram of a structural composition of a device 900 for signal processing according to an embodiment of the present disclosure, and the device 900 for signal processing is applied to a network device. As illustrated in FIG. 9, the communication device 900 includes an indicating unit 910.

The indicating unit is configured to indicate, through configuration information related to a first signal, whether to perform processing or measurement on the first signal by using an AI model, and/or a first AI model used for performing the processing or measurement on the first signal, where the configuration information includes any one of:
reference signal configuration information for configuring the first signal;
CSI reporting configuration information associated with the first signal;
a TCI state associated with the first signal;
CORESET group index information associated with the first signal; and
PCI information associated with the first signal.

In some embodiments, the device 900 for signal processing further includes a second determining unit, configured to determine whether to perform the processing or measurement on the first signal by using the AI model and/or the first AI model used for performing the processing or measurement on the first signal, based on one or more of:
a TRP for the transmission of the first signal,
a cell for the transmission of the first signal, and
a function of the first signal.

In some embodiments, the device 900 for signal processing further includes a receiving unit and/or a second processing unit.

The receiving unit is configured to receive the first signal that is processed by a terminal device by using the first AI model; or receive a reported measurement result after the terminal device performs measurement that is based on the first signal by using the first AI model.

The second processing unit is configured to perform the processing on the first signal by using the second AI model corresponding to the first AI model, or perform, by using the second AI model corresponding to the first AI model, decoding on the measurement result reported by the terminal device.

In some embodiments, the configuration information is the reference signal configuration information for configuring the first signal, the reference signal configuration information includes first indication information. The first indication information is used for indicating whether to perform the processing or measurement on the first signal by using the AI model, and/or the first AI model.

In some embodiments, the configuration information is the reference signal configuration information for configuring the first signal. In a case where the first reference signal resource set does not have an associated AI model, the reference signal configuration information indicates performing the processing or measurement on the first signal without using the AI model. In a case where the first reference signal resource set has an associated AI model, the reference signal configuration information indicates performing the processing or measurement on the first signal by using the first AI model. The first AI model is the AI model associated with the first reference signal resource set.

In some embodiments, the configuration information is the reference signal configuration information for configuring the first signal, the reference signal configuration information indicates a first reference signal resource set. One or more reference signal resources included in the first reference signal resource set are used for performing transmission of the first signal, and the first AI model is the AI model associated with the first reference signal resource set.

In some embodiments, the AI model associated with the first reference signal resource set is predefined, or configured by the network device.

In some embodiments, the configuration information is the CSI reporting configuration information associated with the first signal, and the CSI reporting configuration information includes first indication information. The first indication information is used for indicating whether to perform the processing or measurement on the first signal by using the AI model, and/or the first AI model.

In some embodiments, the configuration information is the CSI reporting configuration information associated with the first signal, and the CSI reporting configuration information is used for configuring CSI measurement that is based on the first signal and CSI reporting. The CSI reporting configuration information includes indication information of a second reference signal resource set, and one or more reference signal resources in the second reference signal resource set are used for performing transmission of the first signal. In a case where the CSI reporting configuration information does not have an associated AI model, the CSI reporting configuration information indicates that the terminal device performs the processing or measurement on the first signal without using the AI model. In a case where the CSI reporting configuration information has the associated AI model, the CSI reporting configuration information indicates that the terminal device performs the processing or measurement on the first signal by using the first AI model. The first AI model is the AI model associated with the CSI reporting configuration information.

In some embodiments, the configuration information is the CSI reporting configuration information associated with the first signal, and the CSI reporting configuration information is used for configuring CSI measurement that is based on the first signal and CSI reporting. The CSI reporting configuration information includes indication information of a second reference signal resource set, and one or more reference signal resources in the second reference signal resource set are used for performing transmission of the first signal. The CSI reporting configuration information has the associated AI model, where the first AI model is the AI model associated with the CSI reporting configuration information

In some embodiments, the AI model associated with the CSI reporting configuration information is predefined, or configured by a network device.

In some embodiments, the configuration information is the TCI state associated with the first signal, and the TCI state associated with the first signal is a TCI state configured by a network device for the first signal. In a case where the TCI state is not configured with an associated AI model, the TCI state indicates that the terminal device performs the processing or measurement on the first signal without using the AI model.

In a case where the TCI state is configured with the associated AI model, the TCI state indicates that the terminal device performs the processing or measurement on the first signal by using the first AI model, where the first AI model is the AI model associated with the TCI state.

In some embodiments, the configuration information is the TCI state associated with the first signal, and the TCI state associated with the first signal is a TCI state configured by a network device for the first signal. The TCI state is configured with the associated AI model, and the first AI model is the AI model associated with the TCI state.

In some embodiments, the configuration information is the CORESET group index information associated with the first signal. In a case where the CORESET group index information is not configured with an associated AI model, the CORESET group index information indicates that the terminal device performs the processing or measurement on the first signal without using the first AI model. In a case where the CORESET group index information is configured with the associated AI model, the CORESET group index information indicates performing the processing or measurement on the first signal by using the first AI model. The first AI model is the AI model associated with the CORESET group index information.

In some embodiments, the configuration information is the CORESET group index information associated with the first signal. The CORESET group index information is configured with an associated AI model, and the first AI model is the AI model associated with the CORESET group index information.

In some embodiments, the CORESET group index information associated with the first signal is CORESET group index information of a CORESET where a first PDCCH is located, and the first PDCCH is a PDCCH used for scheduling the first signal.

In some embodiments, the configuration information is the PCI information associated with the first signal. In a case where the PCI information is not configured with an associated AI model, the PCI information indicates that the terminal device performs the processing or measurement on the first signal without using the AI model. In a case where the PCI information is configured with the associated AI model, the PCI information indicates performing the processing or measurement on the first signal by using the first AI model. The first AI model is the AI model associated with the PCI information.

In some embodiments, the configuration information is the PCI information associated with the first signal. The PCI information is configured with an associated AI model, and the first AI model is the AI model associated with the PCI information.

In some embodiments, the PCI information associated with the first signal is PCI information used for generating a sequence of the first signal, or the PCI information associated with the first signal is PCI information configured in a TCI state of the first signal.

In some embodiments, when the first indication information is used for indicating whether to perform the processing or measurement on the first signal by using the AI model, the first indication information includes 1-bit information. When the first indication information indicates a first value, it indicates performing the processing or measurement on the first signal by using the AI model, and when a value of the first indication information is a second value, it indicates performing the processing or measurement on the first signal without using an AI model. Alternatively, when the first indication information is default, it indicates performing the processing or measurement on the first signal without using the AI model, and when the first information is present, it indicates performing the processing or measurement on the first signal by using the AI model.

In some embodiments, when the first indication information is used for indicating the first AI model, the first indication information indicates a function of the first AI model and/or identification information of the first AI model.

In some embodiments, when the first indication information is used for indicating whether to perform the processing or measurement on the first signal by using the AI model and the first AI model used for performing the processing or measurement on the first signal,
the first indication information includes multiple indication states. A first indication state among the multiple indication states indicates performing the processing or measurement on the first signal without using the AI model, and another indication state among the multiple indication states is used for indicating the first AI model used for performing the processing or measurement on the first signal; and/or the first indication information indicates a function of the AI model, where a first function is used for indicating performing the processing or measurement on the first signal without using the AI model, and another function is used for indicating the first AI model used for performing the processing or measurement on the first signal; and/or the first indication information indicates identification information of the AI model, where the first identification information is used for indicating performing the processing or measurement on the first signal without using the AI model, and another piece of identification information is used for indicating the first AI model used for performing the processing or measurement on the first signal.

In some embodiments, the second processing unit is further configured to perform one or more of signal generation, precoding, modulation, channel encoding, demodulation, channel decoding and channel detection on the first signal by using the second AI model.

In some embodiments, an input structure and/or an output structure of the first AI model is pre-agreed between the terminal device and the network device, or pre-configured by the network device for the terminal device.

Those skilled in the art will appreciate that the related descriptions of the aforementioned communication device in the embodiments of the present disclosure may be understood with reference to the descriptions of the aforementioned communication method in the embodiments of the present disclosure.

FIG. 10 is a schematic structural diagram of a communication device according to an embodiment of the present disclosure. The communication device 1000 may be a terminal device, or a network device. As illustrated in FIG. 10, the communication device 1000 includes a processor 1010 and a memory 1020.

The memory 1020 is configured to store computer-executable instructions.

The processor 1010 is connected to the memory 1020 and configured to implement the method in the embodiments of the present disclosure by executing the computer-executable instructions.

The memory 1020 may be a separate device that is independent of the processor 1010 or may be integrated in the processor 1010.

In some embodiments, as illustrated in FIG. 10, the communication device 1000 may further include a transceiver 1030. The processor 1010 may control the transceiver 1030 to communicate with other devices. Specifically, the transceiver 1030 may send information or data to other devices, or receive information or data from other devices.

Herein, the transceiver 1030 may include a transmitter and a receiver. The transceiver 10330 may further include one or more antennas.

In some embodiments, the communication device 1000 may be the terminal device in the embodiments of the present disclosure. The communication device 1000 may implement the corresponding flows implemented by the terminal device in various methods in the embodiments of the present disclosure. For brevity, details are not elaborated herein again.

In some embodiments, the communication device 1000 may be the network device in the embodiments of the present disclosure. The communication device 1000 may implement the corresponding flows implemented by the network device in various methods in the embodiments of the present disclosure. For brevity, details are not elaborated herein again.

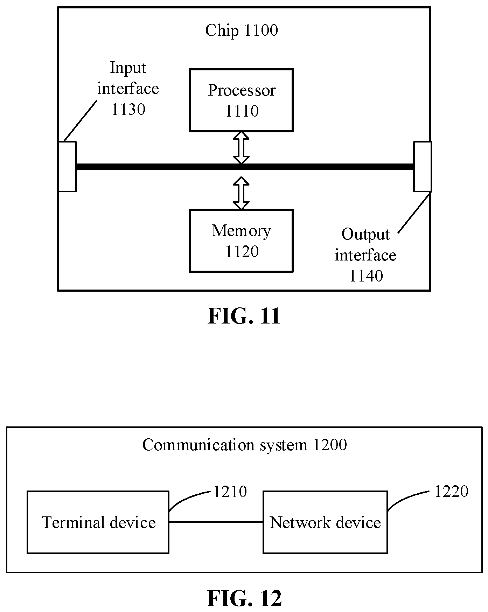

FIG. 11 is a schematic structural diagram of a chip according to an embodiment of the present disclosure. As illustrated in FIG. 11, the chip 1100 includes a processor 1110 and a memory 1120.

The processor 1110 is configured to invoke and execute a computer program from the memory 1120, to enable a device on which the chip is mounted to perform the methods in the embodiments of the present disclosure.

The memory 1120 may be a separate device that is independent of the processor 1110 or may be integrated in the processor 1110.

In some embodiments, the chip 1100 may further include an input interface 1130. The processor 1110 may control the input interface 1130 to communicate with other devices or chips. Specifically, the input interface 1130 may acquire information or data sent by other devices or chips.

In some embodiments, the chip 1100 may further include an output interface 1140. Herein, the processor 1110 may control the output interface 1140 to communicate with other devices or chips. Specifically, the output interface 1140 may output information or data to other devices or chips.

In some embodiments, the chip may be applied to the network device in the embodiments of the present disclosure. The chip may implement the corresponding flows implemented by the network device in various methods in the embodiments of the present disclosure. For brevity, details are not elaborated herein again.

In some embodiments, the chip may be applied to the terminal device in the embodiments of the present disclosure. The chip may implement the corresponding flows implemented by the terminal device in various methods in the embodiments of the present disclosure. For brevity, details are not elaborated herein again.

It should be understood that, the chip referred to in the embodiments of the present disclosure may also be referred to as a system-level chip, a system chip, a chip system, or a systemon-chip, etc.

FIG. 12 is a schematic structural diagram of a communication system according to an embodiment of the present disclosure. As illustrated in FIG. 12, the communication system 1200 may include a terminal device 1210 and a network device 1220.

Herein, the terminal device 1210 may be configured to implement the corresponding functions implemented by the terminal device in the foregoing methods. The network device 1220 may be configured to implement the corresponding functions implemented by the network device in the foregoing methods. For brevity, details are not elaborated herein again.

It is to be understood that the processor in the embodiments of the present disclosure may be an integrated circuit chip with signal processing capacity. In the implementation process, various operations of the above method embodiments may be completed by integrated logic circuits of hardware in the processor or instructions in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software modules may be located in a mature storage medium in the art, such as a Random Access Memory (RAM), a flash memory, a Read-Only Memory (ROM), a Programmable Read-Only Memory (PROM) or electrically erasable programmable memory, or a register. The storage medium is located in the memory, and the processor reads information in the memory and completes the steps in the foregoing methods in combination with hardware of the processor.

It is to be understood that the memory in the embodiments of the present disclosure may be a volatile memory or a non-volatile memory, or may include both the volatile memory and the non-volatile memory. The non-volatile memory may be an ROM, a Programmable ROM (PROM), an Erasable PROM (EPROM), an Electrically EPROM (EEPROM) or a flash memory. The volatile memory may be a RAM and is used as an external high-speed cache. It is exemplarily but unlimitedly described that RAMs in various forms may be adopted, such as a Static RAM (SRAM), a Dynamic RAM (DRAM), a Synchronous DDRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the systems and methods described in the specification includes but is not limited to these and any other proper types of memories.

It is to be understood that the abovementioned memories are exemplary but not restrictive, for example, the memory in the embodiments of the disclosure may also be the SRAM, the DRAM, the SDRAM, the DDR SDRAM, the ESDRAM, the SLDRAM, and the DR RAM. That is to say, the memories described in the embodiments f the disclosure are intended to include, but not limited to, these and any other suitable types of memories.

The embodiments of the present disclosure provide a computer-readable storage medium. The computer-readable storage medium has stored a computer program that, when executed by at least one processor, implements the methods in the embodiments of the present disclosure.

In some embodiments, the computer-readable storage medium may be applied to the network device in the embodiments of the present disclosure. The computer program causes the computer to implement the corresponding flows implemented by the network device in various methods in the embodiments of the present disclosure. For brevity, details are not elaborated herein again.

In some embodiments, the computer-readable storage medium may be applied to the terminal device in the embodiments of the present disclosure. The computer program causes the computer to implement the corresponding flows implemented by the terminal device in various methods in the embodiments of the present disclosure. For brevity, details are not elaborated herein again.

The embodiments of the present disclosure provide a computer program product. The computer program product includes a computer storage medium storing a computer program including instructions executable by at least one processor that, when executed by at least one processor, implement the methods in the embodiments of the present disclosure.

In some embodiments, the computer program product may be applied to the network device in the embodiments of the present disclosure. The computer program instructions cause the computer to implement the corresponding flows implemented by the network device in various methods in the embodiments of the present disclosure. For brevity, details are not elaborated herein again.

In some embodiments, the computer program product may be applied to the terminal device in the embodiments of the present disclosure. The computer program instructions cause the computer to implement the corresponding flows implemented by the terminal device in various methods in the embodiments of the present disclosure. For brevity, details are not elaborated herein again.

The embodiments of the present disclosure provide a computer program that cases a computer to perform the methods in the embodiments of the present disclosure.

In some embodiments, the computer program may be applied to the network device in the embodiments of the present disclosure, and the computer program, when is run on a computer, causes the computer to perform the corresponding flows performed by the network device in various methods of the embodiments of the present disclosure. For brevity, details are not described herein again.

In some embodiments, the computer program may be applied to the terminal device in the embodiments of the present disclosure, and the computer program, when is run on a computer, causes the computer to perform the corresponding flows performed by the terminal device in various methods of the embodiments of the present disclosure. For brevity, details are not described herein again.

Those of ordinary skill in the art may realize that units and algorithm steps of various examples described in combination with the embodiments disclosed in the present disclosure herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the aforementioned apparatuses and units, reference may be made to the corresponding processes in the aforementioned method embodiments, and such specific working processes of the systems, devices and units are not described herein again for the purpose of convenient and brief description.

In the several embodiments provided in the present disclosure, it is to be understood that the disclosed devices and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

If the function is implemented in the form of a software functional unit and sold or used as an independent product, it may also be stored in a computer-readable storage medium. Based on this understanding, the technical solutions of the disclosure essentially or the parts that contribute to the prior art, or part of the technical solutions can be embodied in the form of a software product. The computer software product is stored in a storage medium, including multiple instructions for causing a computer device (which may be a personal computer, a server, or a network device, and the like) to execute all or part of the steps of the methods described in various embodiments of the disclosure. The aforementioned storage medium includes various media capable of storing a program code such as a USB disk, a mobile hard drive disk, the ROM, the RAM, a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A method for signal processing, comprising:
determining, by a terminal device based on configuration information related to a first signal, whether to perform processing or measurement on the first signal by using an Artificial Intelligence (AI) model, and/or a first AI model used for performing the processing or measurement on the first signal, wherein the configuration information comprises any one of:
reference signal configuration information for configuring the first signal;
Channel State Information (CSI) reporting configuration information associated with the first signal;
a Transmission Configuration Indication (TCI) state associated with the first signal;
Control Resource Set (CORESET) group index information associated with the first signal; or
Physical Cell Identifier (PCI) information associated with the first signal.

2. The method of claim 1, wherein the configuration information is the reference signal configuration information for configuring the first signal, the reference signal configuration information comprises first indication information, and the first indication information is used for indicating whether to perform the processing or measurement on the first signal by using the AI model, and/or the first AI model.

3. The method of claim 1, wherein the configuration information is the reference signal configuration information for configuring the first signal,
the reference signal configuration information indicates a first reference signal resource set, and one or more reference signal resources comprised in the first reference signal resource set are used for performing transmission of the first signal,
wherein determining, by the terminal device based on the configuration information related to the first signal, whether to perform the processing or measurement on the first signal by using the AI model and the first AI model used for performing the processing or measurement on the first signal comprises:
in a case where the first reference signal resource set does not have an associated AI model, determining, by the terminal device, to perform the processing or measurement on the first signal without using the AI model; and
in a case where the first reference signal resource set has the associated AI model, determining, by the terminal device, to perform the processing or measurement on the first signal by using the first AI model, wherein the first AI model is the AI model associated with the first reference signal resource set.

4. The method of claim 1, wherein the configuration information is the reference signal configuration information for configuring the first signal,
the reference signal configuration information indicates a first reference signal resource set, and one or more reference signal resources comprised in the first reference signal resource set are used for performing transmission of the first signal,
wherein determining, by the terminal device based on the configuration information related to the first signal, the first AI model used for performing the processing or measurement on the first signal comprises:
the first reference signal resource set has an associated AI model, wherein the first AI model is the AI model associated with the first reference signal resource set.

5. The method of claim 3 or 4, wherein the AI model associated with the first reference signal resource set is predefined, or configured by a network device.

6. The method of claim 1, wherein the configuration information is the CSI reporting configuration information associated with the first signal, the CSI reporting configuration information comprises first indication information, and the first indication information is used for indicating whether to perform the processing or measurement on the first signal by using the AI model, and/or the first AI model.

7. The method of claim 1, wherein the configuration information is the CSI reporting configuration information associated with the first signal, and the CSI reporting configuration information is used for configuring CSI measurement that is based on the first signal that is based on the first signal and CSI reporting,
wherein the CSI reporting configuration information comprises indication information of a second reference signal resource set, and one or more reference signal resources in the second reference signal resource set are used for performing transmission of the first signal,
wherein determining, by the terminal device based on the configuration information related to the first signal, whether to perform the processing or measurement on the first signal by using the AI model and the first AI model used for performing the processing or measurement on the first signal comprises:
in a case where the CSI reporting configuration information does not have an associated AI model, determining, by the terminal device, to perform the processing or measurement on the first signal without using the AI model; and
in a case where the CSI reporting configuration information has the associated AI model, determining, by the terminal device, to perform the processing or measurement on the first signal by using the first AI model, wherein the first AI model is the AI model associated with the CSI reporting configuration information.

8. The method of claim 1, wherein the configuration information is the CSI reporting configuration information associated with the first signal, and the CSI reporting configuration information is used for configuring CSI measurement that is based on the first signal and CSI reporting,
wherein the CSI reporting configuration information comprises indication information of a second reference signal resource set, and one or more reference signal resources in the second reference signal resource set are used for performing transmission of the first signal,
wherein determining, by the terminal device based on the configuration information related to the first signal, the first AI model used for performing the processing or measurement on the first signal comprises:
the CSI reporting configuration information has an associated AI model, wherein the first AI model is the AI model associated with the CSI reporting configuration information.

9. The method of claim 5 or 6, wherein the AI model associated with the CSI reporting configuration information is predefined, or configured by a network device.

10. The method of claim 1, wherein the configuration information is the TCI state associated with the first signal, and the TCI state associated with the first signal is a TCI state configured by a network device for the first signal,
wherein determining, by the terminal device based on the configuration information related to the first signal, whether to perform the processing or measurement on the first signal by using the AI model and the first AI model used for performing the processing or measurement on the first signal comprises:
in a case where the TCI state is not configured with an associated AI model, determining, by the terminal device, to perform the processing or measurement on the first signal without using the AI model; and
in a case where the TCI state is configured with the associated AI model, determining, by the terminal device, to perform the processing or measurement on the first signal by using the first AI model, wherein the first AI model is the AI model associated with the TCI state.

11. The method of claim 1, wherein the configuration information is the TCI state associated with the first signal, and the TCI state associated with the first signal is a TCI state configured by a network device for the first signal,
wherein determining, by the terminal device based on the configuration information related to the first signal, the first AI model used for performing the processing or measurement on the first signal comprises:
the TCI state is configured with an associated AI model, wherein the first AI model is the AI model associated with the TCI state.

12. The method of claim 1, wherein the configuration information is the CORESET group index information associated with the first signal,
wherein determining, by the terminal device based on the configuration information related to the first signal, whether to perform the processing or measurement on the first signal by using the AI model and the first AI model used for performing the processing or measurement on the first signal comprises:
in a case where the CORESET group index information is not configured with an associated AI model, determining, by the terminal device, to perform the processing or measurement on the first signal without using the AI model; and
in a case where the CORESET group index information is configured with the associated AI model, determining, by the terminal device, to perform the processing or measurement on the first signal by using the first AI model, wherein the first AI model is the AI model associated with the CORESET group index information.

13. The method of claim 1, wherein the configuration information is the CORESET group index information associated with the first signal,
wherein determining, by the terminal device based on the configuration information related to the first signal, the first AI model used for performing the processing or measurement on the first signal comprises:
the CORESET group index information is configured with an associated AI model, wherein the first AI model is the AI model associated with the CORESET group index information.

14. The method of claim 12 or 13, wherein the CORESET group index information associated with the first signal is CORESET group index information of a CORESET where a first Physical Downlink Control Channel (PDCCH) is located, and the first PDCCH is a PDCCH used for scheduling the first signal.

15. The method of claim 1, wherein the configuration information is the PCI information associated with the first signal,
wherein determining, by the terminal device based on the configuration information related to the first signal, whether to perform the processing or measurement on the first signal by using the AI model and the first AI model used for performing the processing or measurement on the first signal comprises:
in a case where the PCI information is not configured with an associated AI model, determining, by the terminal device, to perform the processing or measurement on the first signal without using the AI model; and
in a case where the PCI information is configured with the associated AI model, determining, by the terminal device, to perform the processing or measurement on the first signal by using the first AI model, wherein the first AI model is the AI model associated with the PCI information.

16. The method of claim 1, wherein the configuration information is the PCI information associated with the first signal,
wherein determining, by the terminal device based on the configuration information related to the first signal, the first AI model used for performing the processing or measurement on the first signal comprises:
the PCI information is configured with an associated AI model, wherein the first AI model is the AI model associated with the PCI information.

17. The method of claim 15 or 16, wherein the PCI information associated with the first signal is PCI information used for generating a sequence of the first signal, or the PCI information associated with the first signal is PCI information configured in a TCI state of the first signal.

18. The method of claim 2 or 5, wherein when the first indication information is used for indicating whether to perform the processing or measurement on the first signal by using the AI model, the method further comprises:
the first indication information comprises 1-bit information, wherein when the first indication information indicates a first value, it indicates performing the processing or measurement on the first signal by using the AI model, and when a value of the first indication information is a second value, it indicates performing the processing or measurement on the first signal without using an AI model, or
when the first indication information is default, it indicates performing the processing or measurement on the first signal without using the AI model, and when the first information is present, it indicates performing the processing or measurement on the first signal by using the AI model.

19. The method of claim 2 or 5, wherein when the first indication information is used for indicating the first AI model, the first indication information indicates a function of the first AI model and/or identification information of the first AI model.

20. The method of claim 2 or 5, wherein when the first indication information is used for indicating whether to perform the processing or measurement on the first signal by using the AI model and the first AI model used for performing the processing or measurement on the first signal, the method comprises one or more of:
the first indication information comprises a plurality of indication states, wherein a first indication state among the plurality of indication states indicates performing the processing or measurement on the first signal without using the AI model, and another indication state among the plurality of indication states is used for indicating the first AI model used for performing the processing or measurement on the first signal;
the first indication information indicates a function of the AI model, wherein a first function is used for indicating performing the processing or measurement on the first signal without using the AI model, and another function is used for indicating the first AI model used for performing the processing or measurement on the first signal; and
the first indication information indicates identification information of the AI model, wherein the first identification information is used for indicating performing the processing or measurement on the first signal without using the AI model, and another piece of identification information is used for indicating the first AI model used for performing the processing or measurement on the first signal.

21. The method of any one of claims 1 to 20, wherein performing the measurement on the first signal by using the AI model comprises:
obtaining, by the terminal device, downlink channel information based on the measurement of the first signal; and
using, by the terminal device, the downlink channel information as an input of the AI model to obtain a target measurement result.

22. The method of any one of claims 1 to 21, wherein performing the processing on the first signal by using the AI model comprises:
performing one or more of signal generation, precoding, modulation, channel encoding, demodulation, channel decoding and channel detection on the first signal by using the AI model.

23. The method of any one of claims 1 to 22, wherein an input structure and/or an output structure of the first AI model is pre-agreed between the terminal device and a network device, or pre-configured by the network device for the terminal device.

24. A method for information processing, comprising:
indicating, by a network device through configuration information related to a first signal, whether to perform processing or measurement on the first signal by using an Artificial Intelligence (AI) model, and/or a first AI model used for performing the processing or measurement on the first signal, wherein the configuration information comprises any one of:
reference signal configuration information for configuring the first signal;
Channel State Information (CSI) reporting configuration information associated with the first signal;
a Transmission Configuration Indication (TCI) state associated with the first signal;
Control Resource Set (CORESET) group index information associated with the first signal; or
Physical Cell Identifier (PCI) information associated with the first signal.

25. The method of claim 24, wherein the network device determines whether to perform the processing or measurement on the first signal by using the AI model and/or the first AI model used for performing the processing or measurement on the first signal, based on one or more of:
a TRP for transmission of the first signal,
a cell for the transmission of the first signal, and
a function of the first signal.

26. The method of claim 24 or 25, further comprising one or more of:
receiving, by the network device, the first signal that is processed by a terminal device by using the first AI model;
receiving, by the network device, a reported measurement result after the terminal device performs measurement that is based on the first signal by using the first AI model;
performing, by the network device, the processing on the first signal by using a second AI model corresponding to the first AI model; and
performing, by the network device by using the second AI model corresponding to the first AI model, decoding on a measurement result reported by the terminal device.

27. The method of any one of claims 24 to 26, wherein the configuration information is the reference signal configuration information for configuring the first signal, the reference signal configuration information comprises first indication information, and the first indication information is used for indicating whether to perform the processing or measurement on the first signal by using the AI model, and/or the first AI model.

28. The method of any one of claims 24 to 26, wherein the configuration information is the reference signal configuration information for configuring the first signal,
the reference signal configuration information indicates a first reference signal resource set, and one or more reference signal resources comprised in the first reference signal resource set are used for performing transmission of the first signal,
wherein indicating, by the network device through the configuration information related to the first signal, whether to perform the processing or measurement on the first signal by using the AI model and the first AI model used for performing the processing or measurement on the first signal comprises:
in a case where the first reference signal resource set does not have an associated AI model, the reference signal configuration information indicates performing the processing or measurement on the first signal without using the AI model; and
in a case where the first reference signal resource set has the associated AI model, the reference signal configuration information indicates performing the processing or measurement on the first signal by using the first AI model, wherein the first AI model is the AI model associated with the first reference signal resource set.

29. The method of any one of claims 24 to 26, wherein the configuration information is the reference signal configuration information for configuring the first signal,
the reference signal configuration information indicates a first reference signal resource set, and one or more reference signal resources comprised in the first reference signal resource set are used for performing transmission of the first signal,
wherein indicating, by the network device through the configuration information related to the first signal, the first AI model used for performing the processing or measurement on the first signal comprises:
the first reference signal resource set has an associated AI model, wherein the first AI model is the AI model associated with the first reference signal resource set.

30. The method of claim 28 or 29, wherein the AI model associated with the first reference signal resource set is predefined, or configured by the network device.

31. The method of any one of claims 24 to 26, wherein the configuration information is the CSI reporting configuration information associated with the first signal, the CSI reporting configuration information comprises first indication information, and the first indication information is used for indicating whether to perform the processing or measurement on the first signal by using the AI model, and/or the first AI model.

32. The method of any one of claims 24 to 26, wherein the configuration information is the CSI reporting configuration information associated with the first signal, and the CSI reporting configuration information is used for configuring CSI measurement that is based on the first signal and CSI reporting,
wherein the CSI reporting configuration information comprises indication information of a second reference signal resource set, and one or more reference signal resources in the second reference signal resource set are used for performing transmission of the first signal,
wherein indicating, by the network device through the configuration information related to the first signal, whether to perform the processing or measurement on the first signal by using the AI model and the first AI model used for performing the processing or measurement on the first signal comprises:
in a case where the CSI reporting configuration information does not have an associated AI model, the CSI reporting configuration information indicates that the terminal device performs the processing or measurement on the first signal without using the AI model; and
in a case where the CSI reporting configuration information has the associated AI model, the CSI reporting configuration information indicates that the terminal device performs the processing or measurement on the first signal by using the first AI model, wherein the first AI model is the AI model associated with the CSI reporting configuration information.

33. The method of any one of claims 24 to 26, wherein the configuration information is the CSI reporting configuration information associated with the first signal, and the CSI reporting configuration information is used for configuring CSI measurement that is based on the first signal and CSI reporting,
wherein the CSI reporting configuration information comprises indication information of a second reference signal resource set, and one or more reference signal resources in the second reference signal resource set are used for performing transmission of the first signal,
wherein indicating, by the network device through the configuration information related to the first signal, the first AI model used for performing the processing or measurement on the first signal comprises:
the CSI reporting configuration information has an associated AI model, wherein the first AI model is the AI model associated with the CSI reporting configuration information.

34. The method of claim 32 or 33, wherein the AI model associated with the CSI reporting configuration information is predefined, or configured by a network device.

35. The method of any one of claims 24 to 26, wherein the configuration information is the TCI state associated with the first signal, and the TCI state associated with the first signal is a TCI state configured by a network device for the first signal,
wherein indicating, by the network device through the configuration information related to the first signal, whether to perform the processing or measurement on the first signal by using the AI model and the first AI model used for performing the processing or measurement on the first signal comprises:
in a case where the TCI state is not configured with an associated AI model, the TCI state indicates that the terminal device performs the processing or measurement on the first signal without using the AI model; and
in a case where the TCI state is configured with the associated AI model, the TCI state indicates that the terminal device performs the processing or measurement on the first signal by using the first AI model, wherein the first AI model is the AI model associated with the TCI state.

36. The method of any one of claims 24 to 26, wherein the configuration information is the TCI state associated with the first signal, and the TCI state associated with the first signal is a TCI state configured by a network device for the first signal,
wherein indicating, by the network device through the configuration information related to the first signal, the first AI model used for performing the processing or measurement on the first signal comprises:
the TCI state is configured with an associated AI model, wherein the first AI model is the AI model associated with the TCI state.

37. The method of any one of claims 24 to 26, wherein the configuration information is the CORESET group index information associated with the first signal,
wherein indicating, by the network device through the configuration information related to the first signal, whether to perform the processing or measurement on the first signal by using the AI model and the first AI model used for performing the processing or measurement on the first signal comprises:
in a case where the CORESET group index information is not configured with an associated AI model, the CORESET group index information indicates that the terminal device performs the processing or measurement on the first signal without using the AI model; and
in a case where the CORESET group index information is configured with the associated AI model, the CORESET group index information indicates performing the processing or measurement on the first signal by using the first AI model, wherein the first AI model is the AI model associated with the CORESET group index information.

38. The method of any one of claims 24 to 26, wherein the configuration information is the CORESET group index information associated with the first signal,
wherein indicating, by the network device through the configuration information related to the first signal, the first AI model used for performing the processing or measurement on the first signal comprises:
the CORESET group index information is configured with an associated AI model, wherein the first AI model is the AI model associated with the CORESET group index information.

39. The method of claim 37 or 38, wherein the CORESET group index information associated with the first signal is CORESET group index information of a CORESET where a first Physical Downlink Control Channel (PDCCH) is located, and the first PDCCH is a PDCCH used for scheduling the first signal.

40. The method of any one of claims 24 to 26, wherein the configuration information is the PCI information associated with the first signal,
wherein indicating, by the network device through the configuration information related to the first signal, whether to perform the processing or measurement on the first signal by using the AI model and the first AI model used for performing the processing or measurement on the first signal comprises:
in a case where the PCI information is not configured with an associated AI model, the PCI information indicates that the terminal device performs the processing or measurement on the first signal without using the AI model; and
in a case where the PCI information is configured with the associated AI model, the PCI information indicates performing the processing or measurement on the first signal by using the first AI model, wherein the first AI model is the AI model associated with the PCI information.

41. The method of any one of claims 24 to 26, wherein the configuration information is the PCI information associated with the first signal,
wherein indicating, by the network device through the configuration information related to the first signal, the first AI model used for performing the processing or measurement on the first signal comprises:
the PCI information is configured with an associated AI model, wherein the first AI model is the AI model associated with the PCI information.

42. The method of claim 40 or 41, wherein the PCI information associated with the first signal is PCI information used for generating a sequence of the first signal, or the PCI information associated with the first signal is PCI information configured in a TCI state of the first signal.

43. The method of claim 27 or 31, wherein when the first indication information is used for indicating whether to perform the processing or measurement on the first signal by using the AI model, the method further comprises:
the first indication information comprises 1-bit information, wherein when the first indication information indicates a first value, it indicates performing the processing or measurement on the first signal by using the AI model, and when a value of the first indication information is a second value, it indicates performing the processing or measurement on the first signal without using an AI model, or
when the first indication information is default, it indicates performing the processing or measurement on the first signal without using the AI model, and when the first information is present, it indicates performing the processing or measurement on the first signal by using the AI model.

44. The method of claim 27 or 31, wherein when the first indication information is used for indicating the first AI model, the first indication information indicates a function of the first AI model and/or identification information of the first AI model.

45. The method of claim 27 or 31, wherein when the first indication information is used for indicating whether to perform the processing or measurement on the first signal by using the AI model and the first AI model used for performing the processing or measurement on the first signal, the method comprises one or more of:
the first indication information comprises a plurality of indication states, wherein a first indication state among the plurality of indication states indicates performing the processing or measurement on the first signal without using the AI model, and another indication state among the plurality of indication states is used for indicating the first AI model used for performing the processing or measurement on the first signal;
the first indication information indicates a function of the AI model, wherein a first function is used for indicating performing the processing or measurement on the first signal without using the AI model, and another function is used for indicating the first AI model used for performing the processing or measurement on the first signal; and
the first indication information indicates identification information of the AI model, wherein the first identification information is used for indicating performing the processing or measurement on the first signal without using the AI model, and another piece of identification information is used for indicating the first AI model used for performing the processing or measurement on the first signal.

46. The method of claim 26, wherein performing, by the network device, the processing on the first signal by using the second AI model corresponding to the first AI model comprises:
performing, by the network device, one or more of signal generation, precoding, modulation, channel encoding, demodulation, channel decoding and channel detection on the first signal by using the second AI model.

47. The method of any one of claims 24 to 46, wherein an input structure and/or an output structure of the first AI model is pre-agreed between the terminal device and a network device, or pre-configured by the network device for the terminal device.

48. A device for signal processing, applied to a terminal device, comprising:
a first determining unit, configured to determine, based on configuration information related to a first signal, whether to perform processing or measurement on the first signal by using an Artificial Intelligence (AI) model, and/or a first AI model used for performing the processing or measurement on the first signal, wherein the configuration information comprises any one of:
reference signal configuration information for configuring the first signal;
Channel State Information (CSI) reporting configuration information associated with the first signal;
a Transmission Configuration Indication (TCI) state associated with the first signal;
Control Resource Set (CORESET) group index information associated with the first signal; or
Physical Cell Identifier (PCI) information associated with the first signal.

49. A device for signal processing, applied to a network device, comprising:
an indicating unit, configured to indicate, through configuration information related to a first signal, whether to perform processing or measurement on the first signal by using an Artificial Intelligence (AI) model, and/or a first AI model used for performing the processing or measurement on the first signal, wherein the configuration information comprises any one of:
reference signal configuration information for configuring the first signal;
Channel State Information (CSI) reporting configuration information associated with the first signal;
a Transmission Configuration Indication (TCI) state associated with the first signal;
Control Resource Set (CORESET) group index information associated with the first signal; or
Physical Cell Identifier (PCI) information associated with the first signal.

50. A terminal device, comprising:
a memory, configured to store computer-executable instructions; and
a processor connected to the memory and configured to implement the method of any one of claims 1 to 23 by executing the computer-executable instructions.

51. A network device, comprising:
a memory, configured to store computer-executable instructions; and
a processor connected to the memory and configured to implement the method of any one of claims 24 to 47 by executing the computer-executable instructions.

52. A chip, comprising:
a processor, configured to invoke and execute a program from a memory, to enable a device on which the chip is mounted to perform the method of any one of claims 1 to 23 or the method of any one of claims 24 to 47.

53. A computer-readable storage medium having stored a computer program that, when executed by at least one processor, implements the method of any one of claims 1 to 23 or implements the method of any one of claims 24 to 47.

54. A computer program product comprising a computer storage medium, wherein the computer storage medium stores a computer program including instructions executable by at least one processor that, when executed by at least one processor, implement the method of any one of claims 1 to 23 or implements the method of any one of claims 24 to 47.

55. A computer program that causes a computer to perform the method of any one of claims 1 to 23 or implement the method of any one of claims 24 to 47.
